# EUROPÄISCHE PATENTSCHRIFT

(11) **EP 2 512 958 B1**
(45) Veröffentlichungstag und Bekanntmachung des Hinweises auf die Patenterteilung: **01.05.2013**
(21) Anmeldenummer: 11719150.2
(22) Anmeldetag: 10.03.2011
(51) Int. Cl.: B65G 17/20, B65G 17/38, B65G 23/14

(54) **TRANSPORTVORRICHTUNG MIT LAUFWAGEN**
TRANSPORT APPARATUS WITH MOVING TRUCKS
DISPOSITIF DE TRANSPORT COMPORTANT DES CHARIOTS

(30) Priorität: 08.06.2010 DE 102010023062
(43) Veröffentlichungstag der Anmeldung: 24.10.2012
(73) Patentinhaber: Böhrer GmbH, 74746 Höpfingen (DE)
(72) Erfinder: BÖHRER, Manfred, 74736 Hardheim (DE)
(74) Vertreter: Böck, Bernhard
(86) Internationale Anmeldenummer: PCT/DE2011/000245
(87) Internationale Veröffentlichungsnummer: WO 2011/153974

(56) Entgegenhaltungen:
- WO-A2-2008/092287
- DE-A1- 2 203 495
- DE-B- 1 254 529
- DE-C- 151 868
- DE-C- 738 491
- DE-C- 945 014
- FR-A- 1 130 690
- GB-A- 636 355
- GB-A- 2 419 863

## Beschreibung

Die Erfindung betrifft eine Transportvorrichtung zum Transport von insbesondere stückigen Gütern, bei der der Transport mittels an einer Führungsbahn angeordneten Laufwagen gemäß dem Oberbegriff des Anspruchs 1 oder gemâβ dem Oberbegriff des Anspruchs 4 erfolgt.

Aus dem Stand der Technik sind verschiedenste Ausführungsformen von Transportvorrichtungen bekannt. Vorliegend betrifft die Transportvorrichtung derartige Ausführungsformen, bei denen Laufwagen entlang von Führungsbahnen verschiebbar sind. Hierbei besteht die Führungsbahn in der Regel aus geraden oder gebogenen Profilschienen, an denen die Laufwagen rollend und/oder gleitend gelagert sind. Allgemein hin bekanntes Ausführungsbeispiel ist die Hängebahn, bei der ein Laufkörper an einer Profilschiene angeordnet ist, wobei an dem Laufkörper die Last angehängt ist. Somit ist es in einfacher Weise möglich, Lasten entlang der Führungsbahn zu transportieren.

Um eine Mehrzahl von Lasten zugleich bewegen zu können, ist es bekannt, Laufwagen einzusetzen, welche aneinander gekoppelt werden können. Somit wird ein gemeinsamer Transport mehrerer Laufwagen beim Antrieb eines einzelnen Laufwagens ermöglicht. Ein Beispiel für eine derartige Transportvorrichtung zeigt die Druckschrift DE 199 17 806 A1. Im darin beschriebenen Fall handelt es sich um eine Transportvorrichtung in Art einer Hängefördervorrichtung, bei der Tragwagen auf Laufschienen verschiebbar angeordnet sind. Hierbei weist jeder Tragwagen eine Verbindungsstrebe auf, an deren beiden Enden jeweils ein Paar Laufrollen angebracht sind, welche wiederum die entsprechende Laufschiene umgreifen. Somit ist der Tragwagen entlang der Laufschiene frei verschiebbar. Im Stand der Technik befindet sich bei einer derartigen Hängeförderung die Verbindungsstrebe parallel liegend unterhalb der Laufschiene. An der Verbindungsschiene kann nunmehr die zu transportierende Last in geeigneter Weise angebracht werden. Zur Kupplung der Mehrzahl von Tragwagen ist an beiden Enden eines jeden Tragwagens eine Kupplungseinrichtung mit einem hakenförmigen Kupplungselement vorhanden, wobei entsprechend ein Haken eines ersten Tragwagens mit einem Haken eines zweiten Tragwagens zum Eingriff gebracht werden kann. Folglich werden beim Ziehen am ersten Tragwagen alle gekoppelten Tragwagen mitgeführt.

Vorteilhaft an dieser Lösung ist insbesondere, dass die einzelnen Tragwagen flexibel und einfach aneinander gekoppelt und entkoppelt werden können. Hierzu bedarf es lediglich eines Aushängens bzw. Einhängens der Kupplungseinrichtung ineinander durch eine Bewegung senkrecht nach oben entgegen der nach unten ziehenden Last am Tragwagen.

Problematisch bei der zuvor beschriebenen Lösung ist jedoch zum einen, dass Schubkräfte auf einen Transportwagen, zum gleichzeitigen Transport der davorliegenden Transportwagen, nicht unbegrenzt ausgeübt werden können. Dies begründet sich zum einen in der nicht symmetrischen Kopplung mittels der hakenförmigen Kupplungseinrichtungen. Diese führt zu einer ungleichmäßigen Einleitung der Schubkraft auf die einzelnen Tragwagen. Zum anderen ist die von der Laufschiene beabstandete Position der Kupplungen von Nachteil. Im Ergebnis führt dies zu einem möglichen Ausbrechen aus der senkrecht hängenden Lage der einzelnen Tragwagen, insbesondere im Verlauf von Laufschienen-Bögen. Insofern bietet sich die vorgestellte Ausführungsform vorteilhaft für einen ziehenden Transport und weniger für einen schiebenden Transport an. Des Weiteren ist zu berücksichtigen, dass in der zuvor beschriebenen Ausführungsform ein automatischer Antrieb der einzelnen Transportwagen nur erschwert möglich ist. Dies liegt insbesondere darin begründet, dass es keine geeignete Angriffsstelle für einen automatischen Antrieb gibt. Allenfalls ist es denkbar, die Hochstrebe in der Verbindung von der Verbindungsstrebe zu den Laufrollen zu nutzen, um dort mittels eines gabelartigen Antriebs eine Zugbewegung auf den vordersten Tragwagen auszuüben.

Die Druckschrift DE 151 868 C offenbart eine Transportvorrichtung mit den Merkmalen des Obergriffs des Anspruch 4, bei welcher eine Mehrzahl aneinander gekoppelter Wagen jeweils einen pendelnd gelagerten Becher umfassen. Die Kopplung erfolgt hierbei mittels einer Gelenkstange, welche über einen ersten Zapfen waagerecht und über die Wagenachse als zweiter Zapfen senkrecht schwenkbar ist. Somit wird eine Bewegbarkeit im Raum erzeugt.

Die Wagen laufen hierbei auf jeder Seite mit je zwei Rädern auf bzw. in einer Führungsschiene. Im Gegensatz zur vorherigen Ausführung ermöglicht diese Variante neben einem ziehenden Transport ebenso einen sicheren schiebenden Transport, wobei der Bahnverlauf sowohl Bögen in der horizontalen Ebene als auch in einer senkrechten Ebene aufweisen kann. Die pendelnde Lagerung stellt hierbei sicher, dass der Becher seinen Inhalt nicht verliert.

Ein Fördersystem mit einer sowohl ziehend als auch schiebend antreibbaren Gliederkette offenbart die dem Oberbegriff des Anspruchs 1 entsprechende Schrift WO 2008/092287 A2. Hierbei sind eine Mehrzahl von Gliedern aneinander gekoppelt, welche jeweils ein erstes und ein zum ersten komplementäres zweites Gelenkelement aufweisen.

In einer ersten Ausführungsform als Halbkugel-Gelenk stellt ein durchgehendes Seil sicher, dass die Gelenkfläche auch bei einem Ziehen an einem Glied immer unter Druck gehalten wird. In alternativer Ausführung wird auf das Seil verzichtet und statt dessen wird das Gelenk um ein gegenüber dem Halbkugel-Gelenk angeordnetes ringförmiges Kugelgelenk ergänzt. Zur Ermöglichung der Montage der Gelenkelemente aneinander sowie unter Berücksichtigung der je nach Bewegungsrichtung auftretenden Kräfte wird der Radius des ringförmigen Kugelgelenks deutlich größer ausgeführt als derjenige des Halbkugel-Gelenks.

Aufgabe der vorliegenden Erfindung ist es daher, eine Transportvorrichtung zur Verfügung zu stellen, bei der im Gegensatz zu den bekannten Lösungen aus dem Stand der Technik eine größere Flexibilität hinsichtlich der Gestaltung der Führungsbahn erzielt wird und hierbei zugleich ein automatisch angetriebener Transport von einzelnen Laufwagen bzw. Laufwagengruppen ermöglicht wird.

Die vorliegende Aufgabe wird durch eine erfindungsgemäße Ausführungsform gemäß dem Anspruch 1 sowie 4 gelöst.

Vorteilhafte Ausführungsformen der Erfindung sind Gegenstand der Unteransprüche.

Eine gattungsgemäße Transportvorrichtung dient zum Transport von insbesondere stückigen Gütern, insbesondere pharmazeutischen Produkten. Hierbei sind stückige Güter nicht nur auf Schüttgüter beschränkt, sondern können vielfältiger Art sein. Insofern ist auch der Transport von flüssigen Produkten möglich, sofern diese in entsprechenden Behältnissen transportiert werden. Insofern betrifft die Transportvorrichtung den Transport von Gütern jeglicher Art, sofern die Güter separierbar transportabel sind.

Hierbei weist die gattungsgemäße Transportvorrichtung eine Führungsbahn und eine an der Führungsbahn angeordnete Laufwagenanordnung auf. Weiterhin kennzeichnet die Transportvorrichtung, dass die Laufwagenanordnung antreibbar ist. Welcher Art der Antrieb hierbei ist, ist zunächst unerheblich. Zumindest ist vorgesehen, dass die Laufwagenanordnung als solche - ohne Berücksichtigung des zu transportierenden Gutes oder eines hierbei eingesetzten Güterträgers - angetrieben werden kann. Insbesondere wird hierunter kein manueller Antrieb, sondern vielmehr der Einsatz eines automatischen bzw. elektrischen Antriebs verstanden. Das heißt, dass die Laufwagenanordnung von einem Antrieb in Bewegung versetzt werden kann.

Die Laufwagenanordnung umfasst hierbei zumindest zwei Laufwagenelemente, wobei jedes Laufwagenelement wiederum eine Verbindungsstrebe aufweist, an deren ersten Ende zumindest ein Laufkörper angeordnet ist. Hierbei kann der Laufkörper gleitend oder rollend in der Führungsbahn verschoben werden. Insofern wird die Laufwagenanordnung mittels der Laufkörper an der Führungsbahn geführt. Wesentliches Merkmal der gattungsgemäßen Transportvorrichtung ist es hierbei, dass zumindest zwei Laufwagenelemente eine Laufwagenanordnung bilden, wobei eine Laufwagenanordnung unabhängig vom Vorhandensein einer anderen Laufwagenanordnung innerhalb der Führungsbahn bewegt werden kann. D.h. diese Ausführungsform der Transportvorrichtung ist grundlegend von derjenigen zu unterscheiden, bei der eine durchgehende Transportkette Verwendung findet.

Weiterhin weist der Laufkörper ein erstes Gelenkelement und das zweite Element der Verbindungsstrebe ein zweites Gelenkelement auf. Hierbei ist vorgesehen, dass das erste Gelenkelement eines ersten Laufwagenelements mit dem zweiten Gelenkelement des zweiten Laufwagenelements gelenkig miteinander verbindbar ist. Insofern weist eine Laufwagenanordnung zumindest zwei Laufwagenelemente auf, welche untereinander über die Kopplung des ersten mit dem zweiten Gelenkelement miteinander verbunden sind.

Insbesondere gilt es bei der Auslegung der Gelenkverbindung zu beachten, dass eine Stabilisierung der Lage der einzelnen Laufwagenelemente dahingehend erfolgt, dass jedes Laufwagenelement der Laufwagenanordnung - unter Vernachlässigung eines letzten Laufwagenelements einer Laufwagenanordnung - jeweils nur einen Laufkörper bedarf. Insofern wird die Lage eines Laufwagenelements an einem ersten Ende durch den Laufkörper des Laufwagenelements und die Lage an dem zweiten Ende durch die Lage des Laufkörpers des folgenden Laufwagenselements mittels der Kupplung über die Gelenkverbindung bestimmt. D.h., dass jedes Laufwagenelement seinerseits lediglich einen Laufkörper aufweisen muss. Die Lage der einzelnen Laufwagenelemente relativ zur Führungsbahn wird somit durch die beiden Laufkörper - die des jeweiligen Laufwagenelements und des folgenden Laufwagenelements - und der Ausdehnung der Verbindungsstrebe bestimmt. Insofern ist eine stabile Lage jedes Laufwagenelements gegeben, wobei die Verbindungsstrebe vorteilhaft parallel zur Führungsbahn ausgerichtet werden kann.

Zur Ermöglichung einer möglichst flexiblen Gestaltung der Führungsbahn, insbesondere in der Ausführung mit bogenförmigen Verläufen, sowohl in der Horizontalen als auch in der Vertikalen, als auch zur Übertragung sowohl axialer als auch radialer Kräfte wird erfindungsgemäße die Gelenkverbindung als Kugelverbindung ausgeführt. Hierbei wird das erste Gelenkelement des Laufkörpers durch eine Kugelaufnahme gebildet und das am gegenüberliegenden Ende der Verbindungsstrebe angeordnete zweite Gelenkelement als Gelenkkugel. Somit ist zwischen zwei über ein Gelenkelement verbundene Laufwagenelemente eine Verschwenkung und/oder Verdrehung der beiden verbundenen Laufwagenelemente gegeneinander möglich, wobei zugleich eine axiale und radiale Positionierung sichergestellt ist. Durch diese Ausführungsform wird eine besonders große Freiheit hinsichtlich der Gestaltung der Führungsbahn geschaffen. Somit sind Bahnverläufe möglich, die ansonsten nicht möglich wären.

Weiterhin ist erfindungsgemäß vorgesehen, dass die Kugelaufnahme mehrteilig mit einer Kugelpfanne und zumindest einem Kugelhülsenabschnitt gebildet wird. Hierbei bedarf es einer mehrteiligen Bauweise des Laufkörpers mit einem ersten Bauteil, an welchem die Verbindungsstrebe lösbar oder fest oder integral angebracht ist, und mit zumindest einem zweiten Bauteil. Die Kugelpfanne ist dem ersten Bauteil zuzuordnen und der Kugelhülsenabschnitt dem zweiten Bauteil, wobei die Kugelpfanne bzw. der Kugelhülsenabschnitt jeweils Bestandteile des jeweiligen Bauteils sein können oder hieran mittels eines weiteren getrennten Bauteils anschließen.

In bevorzugter Ausführungsform weist die Transportvorrichtung zumindest ein Doppel-Laufwagenelement mit einer Doppel-Verbindungsstrebe auf, an deren beiden Enden zumindest ein Laufkörper angeordnet ist. Bei Betrachtung der kürzesten möglichen Laufwagenanordnung besitzt diese somit ein einziges reguläres Laufwagenelement wie zuvor beschrieben und ein einziges Doppel-Laufwagenelement. Beim Doppel-Laufwagenelement ist wiederum übereinstimmend mit dem anderen regulären Laufwagenelement zumindest ein Laufkörper mit einem ersten Gelenkelement versehen, welches gelenkig mit dem zweiten Gelenkelement des anderen regulären Laufwagenelements verbindbar ist.

Aufgrund der endlichen Länge der Laufwagenanordnung bedarf es einer vorteilhaften Lösung zur Gewährleistung einer stabilen Lage aller zugehörigen Laufwagenelemente. Diese wird bezüglich der beiden an den Enden befindlichen Laufwagenelemente in besonders vorteilhafter Weise dadurch realisiert, dass an einem ersten Ende der Laufwagenanordnung ein reguläres Laufwagenelement angeordnet wird, wobei sich dessen einziger Laufkörper zugleich am Ende der Laufwagenanordnung befindet. Am anderen Ende der Laufwagenanordnung hingegen wird das beidseitig mit Laufkörpern ausgestattete Doppel-Laufwagenelement angeordnet. Somit wird sichergestellt, dass an beiden Enden der Laufwagenanordnung jeweils ein Laufkörper angeordnet ist. Zugleich wird erreicht, dass jedes Laufwagenelement durch zwei beabstandete Laufkörper an der Führungsbahn gelagert ist. Hierbei weisen die regulären Laufwagenelemente lediglich einen Laufkörper auf, wobei nur das am zweiten Ende befindliche Doppel-Laufwagenelement zwei Laufkörper besitzt.

Besonders vorteilhaft ist es, wenn beide Laufkörper des Doppel-Laufwagenelements auf beiden Seiten jeweils ein erstes Gelenkelement aufweisen. Somit wird es ermöglicht, das Doppel-Laufwagenelement innerhalb der Laufwagenanordnung einzusetzen. Beidseitig können in entgegen gesetzter Richtung die regulären Laufwagenelemente anschließen. Gleichfalls wird somit sichergestellt, dass an beiden Enden der Laufwagenanordnung jeweils ein Laufkörper positioniert ist.

Besonders vorteilhaft ist es hierbei, wenn das Doppel-Laufwagenelement symmetrisch ausgebildet wird, wobei insbesondere zwei identische Laufkörper beidseitig einer Doppel-Verbindungsstrebe angeordnet sind, als dass hierdurch die Herstellungskosten gering gehalten werden können.

Weiterhin ist es vorteilhaft, ein Verbindungs-Laufwagenelement bereitzustellen. In diesem Fall weist ein Verbindungs-Laufwagenelement beidseitig einer Verbindungs-Verbindungsstrebe jeweils ein zweites Gelenkelement auf. Somit wird es möglich, zwei reguläre oder Doppel-Laufwagenelemente über die jeweiligen Laufkörper mit ersten Gelenkelementen zu koppeln. Somit wird eine große Flexibilität, insbesondere hinsichtlich einer Änderung der Konfiguration der Laufwagenanordnung im laufenden Betrieb, erreicht.

In einer zweiten erfindungsgemäßen Ausführungsform wird insofern die Transportvorrichtung von zumindest einer Laufwagenanordnung gebildet, welche aus zwei Doppel-Laufwagenelementen und zwischengeordnetem Verbindungs-Laufwagenelement gebildet wird. Durch Erhöhung der Anzahl zu je einem Doppel-Laufwagenelement und einem Verbindungs-Laufwagenelement ist die Länge der Laufwagenanordnung beliebig erweiterbar. Diesbezüglich bedarf es keiner weiteren Erläuterungen, als dass auf die zuvor beschriebene Ausführungsform verwiesen werden kann.

Gleich welche der zuvor beschriebenen Varianten zur erfindungsgemäßen Ausführungsform gewählt wird, weist eine Laufwagenanordnung insgesamt zumindest einen, insbesondere genau einen, Laufkörper mehr auf als Verbindungsstreben vorhanden sind. Dies liegt darin begründet, dass die beiden Enden der Laufwagenanordnung durch Laufkörper gekennzeichnet sind. Hierbei ist nicht zwingend der Laufkörper das geometrische Ende der Laufwagenanordnung. Je nach Ausführungsform der Laufwagenelemente, seien es reguläre Laufwagenelemente mit jeweils einem Laufkörper oder Doppel-Laufwagenelemente, ist es gleichfalls zulässig und möglich, beispielsweise einen Teilabschnitt eines Verbindungselements über den Laufkörper an den Enden der Laufwagenanordnung hinausgehen zu lassen. Relevant ist hierbei, dass am Ende der Laufwagenanordnung an der Führungsbahn nur die Laufkörper anliegen und keine anderen Bestandteile der Laufwagenelemente.

Zur Erzeugung einer definierten Lage der Laufwagenelemente bezüglich der Führungsbahn ist es besonders vorteilhaft, wenn der Laufkörper mindestens drei, insbesondere vier, am Umfang angeordnete drehbar gelagerte Laufrollen aufweist. Durch die Verwendung von Laufrollen wird eine rollende Bewegung entlang der Führungsbahn realisiert. Dies ermöglicht somit eine verschleiß- und energiearme Bewegung der Laufwagenanordnung entlang der Führungsbahn. Die Verwendung von drei, insbesondere vier, Laufrollen stellt hierbei eine Positionierung der Laufkörper und somit der Laufwagenelemente radial zur Führungsbahn unabhängig von deren räumlichen Verlauf sicher.

Besonders vorteilhaft ist es hierbei, wenn mindestens eine der Laufrollen elastisch am Laufkörper gelagert ist. Insbesondere bei vier eingesetzten Laufrollen ist es vorteilhaft, zwei der Laufrollen elastisch zu lagern. Dies betrifft eine Nachgiebigkeit radial zur Achse der Führungsbahn. Somit kann gewährleistet werden, dass sämtliche Laufrollen spielfrei in der Führungsbahn anliegen, wobei vorhandene Toleranzen ausgeglichen werden können. Zudem wird durch die elastische Lagerung ein unkontrolliertes Klappern zwischen dem Laufkörper und der Führungsbahn verhindert.

Zur Realisierung der Führungsbahn ist es besonders vorteilhaft, wenn diese je nach dem Bahnverlauf aus mehreren Segmenten aufgebaut wird. Somit wird es ermöglicht, beispielsweise standardisierte Bahnbögen mit verschienen Winkeln für horizontal sowie für vertikal ausgerichtete Bahnverläufe bereitzustellen.

Zur Verbindung der Führungsbahn-Segmente ist es wiederum besonders vorteilhaft, geteilte Segmentverbindungen einzusetzen. Hierbei wird an beiden Enden des Segments eine Segmentverbinderhälfte montiert. Diese sind vorzugsweise identisch ausgeführt. Die Montage der Segmente aneinander erfolgt hierbei durch Verbinden der Segmentverbinderhälften.

Weiterhin ist es vorteilhaft, wenn die Segmentverbinderhälften derart montiert sind, dass an einem Ende des Segments die Segmentverbinderhälfte über das Bahnsegment heraus steht und am anderen Ende das Bahnsegment über der Segmentverbinderhälfte heraussteht. Somit wird der bündige Übergang zwischen den Bahnsegmenten gewährleistet, indem das überstehende Bahnsegment in die überstehende Segmentverbinderhälfte eingeschoben wird, welche insofern beide anschließenden Bahnsegmente umgreift.

Mit dem erfindungsgemäß vorgesehenen Einsatz von einzelnen Laufwagenordnungen bzw. zumindest einer Laufwagenordnung wird es weiterhin ermöglicht, im Bahnverlauf Weichen vorzusehen. Somit können im Verlauf der Führungsbahn Abzweigungen vorgesehen werden und der Laufwagen kann je nach Erfordernis zu unterschiedlichen Stellen in unterschiedlichen Bahnzweigen geleitet werden. Wenngleich es möglich wäre, ein Umsetzen eines Bahnabschnitts samt der Laufwagenanordnung vorzunehmen, ist es von Vorteil, wenn eine Weiche vergleichbar einer Schienenweiche oder ein austauschbares Weichensegment im Bahnverlauf eingesetzt wird. Somit bedarf es zur Lenkung der Laufwagenanordnung im Bahnverlauf mit der Zuordnung zu bestimmten Bahnabzweigungen lediglich der Veränderung der Weichenstellung, wobei die Laufwagenanordnung die Weiche hierbei fließend von einem vorherigen Bahnabschnitt über die Weiche zum nachfolgenden Bahnabschnitt durchläuft.

Wenngleich es zur Gestaltung der Führungsbahn verschiedenste Möglichkeiten gibt, ist es besonders vorteilhaft, wenn die Führungsbahn als eine im Wesentlichen über die gesamte Länge geschlitzte Führungsschiene ausgebildet wird. Hierbei sind die Laufkörper einer Laufwagenanordnung im Wesentlichen innerhalb der Führungsbahn angeordnet. Hierbei ist es zunächst unerheblich, ob die Führungsbahn im Querschnitt eine Kreisform oder eine Rechteckform oder dergleichen aufweist. Zumindest befindet sich der Laufkörper innerhalb dieses Querschnitts der Führungsbahn und liegt mit den Gleit- bzw. Rollflächen an einer zum Inneren weisenden Fläche der Führungsbahn an.

Insbesondere ist hierbei vorgesehen, dass die Verbindungsstrebe zwischen den Laufkörpern gleichfalls innerhalb der Führungsbahn positioniert ist. Insofern liegen notwendigerweise die Gelenkelemente gleichfalls innerhalb des Querschnitts der Führungsbahn. Durch diese Anordnung von Führungsbahn zu Laufkörpern bzw. Gelenkelementen und Verbindungsstrebe wird eine besonders flexible und zugleich laufstabile Ausführungsform geschaffen. Besonders vorteilhaft ist es hierbei, wenn die Gelenkverbindung einen Drehpunkt nahe dem Mittelpunkt der Führungsbahn aufweist, als dass somit unabhängig von den Bahnverläufen eine gleichmäßige Bewegung ermöglicht wird. Zudem verbessert der somit mittig zur Führungsbahn liegende Kraftübertragungspunkt eine stabile Lage der Laufwagenanordnung.

Zur Aufnahme der Last wird in besonders vorteilhafter Weise an zumindest einem Laufwagenelement, vorzugsweise im Wesentlichen senkrecht zur Mittellängsachse des Laufwagenelements angeordnet, ein Lastträger angeordnet. Hierbei ragt der Lastträger durch den Schlitz der Führungsschiene aus dieser heraus. Insofern ist das Laufwagenelement mit Laufkörper, Verbindungsstrebe und Gelenkelementen innerhalb des Querschnitts der Führungsschiene positioniert, während hierbei der Lastträger aus der Führungsbahn herausragt. Welcher Art dieser Lastträger ist, ist hierbei zunächst unerheblich. Wesentlich ist, dass am Lastträger mittels geeigneter Einrichtungen das zu transportierende Gut transportiert werden kann.

Besonders vorteilhaft ist es, wenn der Lastträger am Laufkörper befestigt oder integriert ist. Somit wird die Herstellung vereinfacht ohne Einbußen in der Flexibilität. Im Falle eines mehrteiligen Laufkörpers wird der Lastträger vorteilhaft am ersten Bauteil befestigt, an welchem gleichfalls die Verbindungsstrebe angebunden ist.

Alternativ ist es ebenso möglich, den Lastträger an der Verbindungsstrebe anzubinden. Jedoch müssen im Falle einer Steckverbindung zwischen der Verbindungsstrebe und dem Laufkörper gleichfalls die auftretenden Lasten über diese Steckverbindung zumindest zum Großteil übertragen werden.

Besonders vorteilhaft ist es hierbei, wenn am Lastträger ein Führungselement angeordnet ist, mit dem der Lastträger im Schlitz der Führungsschiene geführt ist. Somit erfolgt zugleich mittels des Lastträgers eine Festlegung der rotatorischen Lage des Laufwagenelements relativ zur Führungsbahn. Dies kann im einfachen Fall eine gleitende Führung eines Führungselements mit zur Breite des Schlitzes passend gewählter Stärke sein. In besonders vorteilhafter Ausführungsform wird hierzu ein rollend gelagertes Führungselement gewählt. In jedem Fall wird durch die Zuordnung des Führungselements innerhalb des Schlitzes sichergestellt, dass der Lastträger und somit zugleich das Laufwagenelement eine zur Längsachse der Führungsbahn rotatorisch definierte Lage einnimmt. Somit bleibt die Lage des Lastträgers bzw. des Laufwagenelements nicht der Gewichtskraft der nach unten ziehenden Last überlassen, sondern die Lage wird vielmehr definiert vorgegeben. Dies ist insbesondere dahingehend besonders vorteilhaft, wenn beispielsweise der Lastträger gerade nicht senkrecht nach unten hängen soll oder ein helixförmiger Bahnverlauf realisiert werden soll.

Zum flexiblen Transport verschiedener Güter ist es besonders vorteilhaft, wenn vorzugsweise schalen- oder korbartige Güterträger eingesetzt werden, die wiederum an zumindest einem Lastträger eines Laufwagenelements befestigt sind. Somit kann ein Transport von unterschiedlichen Gütern innerhalb der Güterträger erfolgen.

Besonders vorteilhaft ist es hierbei, wenn der Güterträger mittels zumindest einer Gelenkstrebe am Lastträger angebunden ist. Hierbei ist eine Schwenkbewegung zwischen der Gelenkstrebe und dem Güterträger zu ermöglichen. Insofern ist es möglich, eine in der Vertikale bogenförmige Bahnführung zu wählen, wobei bei einem beispielsweise senkrecht verlaufenden Gütertransport der korbartige Güterträger immer jeweils in die Waagrechte schwenken kann und somit das zu transportierende Gut sicher im Güterträger transportiert wird, ohne herauszufallen.

Zur Umsetzung gibt es im einfachsten Falle die Möglichkeit, die Gelenkstrebe fest am Lastträger anzubinden bzw. als ein Bauteil auszuführen. Somit wird der für die Schwenkbarkeit des Güterträgers notwendige Abstand zur Führungsbahn realisiert.

Besonders bevorzugt wird jedoch eine Verbindung zwischen der Gelenkstrebe und dem Lastträger mittels einer Schnellverschlussverbindung. Durch den Schnellverschluss wird es ermöglicht, den Güterträger mit seiner Gelenkverbindung schnell und flexibel auszutauschen und je nach aktuellen Erfordernissen auszuwählen und über den Schnellverschluss anzubringen.

Zur besseren Lastverteilung ist es jedoch besonders vorteilhaft, wenn ein Güterträger an jeweils zwei Lastträgern einer Laufwagenanordnung angebunden ist. Hierbei erfolgt die Verbindung zwischen den Güterträgern zu den beiden Lastträgern jeweils mit Gelenkstreben. Erforderlich ist hierbei eine schwenkbare Anbindung sowohl zwischen dem Lastträger und der Gelenkstrebe als auch zwischen der Gelenkstrebe und dem Güterträger. Insofern wird vorteilhaft der Schnellverschluss erweitert zu einer Schnellverschluss-Gelenkverbindung. Zur Realisierung von bogenförmigen Bahnverläufen in einer vertikalen Ebene bedarf es eines Gelenks mit einer Schwenkbarkeit um eine waagrechte senkrecht zur Führungsbahn liegende Schwenkachse. Für den Fall von bogenförmigen Bahnverläufen in einer waagrechten Ebene bedarf es einer Drehbarkeit in der Gelenkverbindung um eine vertikale senkrecht zur Führungsbahn liegende Drehachse. Durch die Kombination beider Gelenkbewegungen sind somit räumliche Bahnverläufe der Führungsbahn möglich und dennoch wird eine stabile und sichere Lage des Güterträgers gewährleistet.

Die Verwendbarkeit der erfindungsgemäßen Transportvorrichtung wird durch eine Ausgestaltung des Güterträgers mittels Schwenkbarkeit zusätzlich verbessert. Hierbei erhält der Güterträger ein Schwenklager mit einer waagrechten Drehachse. Diese Drehachse kann zugleich die Drehachse in der Anbindung der Gelenkstreben sein. Zumindest wird in dieser vorteilhaften Ausführungsform der Güterträger dahingehend beispielsweise mittels eines Trägerschwenkhebels erweitert, dass am Trägerschwenkhebel ein externer Schwenkmechanismus angreifen kann und den Güterträger um die Drehachse schwenkt und somit beispielsweise der Inhalt des Güterträgers ausgekippt wird.

Wesentlicher Aspekt der vorliegenden Erfindung ist es, einen automatischen Antrieb zu ermöglichen, wenngleich dies keine Vorraussetzung in der Anwendung ist. Diesbezüglich ist es von besonderem Vorteil, wenn über die Gelenkverbindung zwischen den einzelnen Laufwagenelementen - wobei sich eine Zugkraft generell als unproblematisch darstellt - weiterhin eine Schubkraft von einem Laufwagenelement auf ein vorauseilendes Laufwagenelement übertragbar ist. Somit wird entgegen dem Stand der Technik durch diese Ausführungsform die Einsetzbarkeit der Transportvorrichtung deutlich verbessert. Insbesondere ist durch die neu geschaffene Ausführungsform der Einsatz eines mechanischen Antriebs erheblich vereinfacht, als dass bei Vorbeilaufen der Laufwagenanordnung an einer Antriebsstelle alle Laufwagenelemente antreibbar sein können und somit im Verbund in den Gelenkverbindungen zunächst eine Zugkraft vorliegt, welche zu einer Schubkraft wechselt.

Durch die Kopplung zweier Laufwagenelemente mittels der Gelenkverbindung kann eine lagestabile Verbindung der Laufwagenanordnung geschaffen werden. Besonders vorteilhaft ist es hierbei, wenn die beiden Gelenkelemente eine relative Bewegung zueinander im Wesentlichen verhindern und lediglich eine Schwenkbewegung zulassen, d.h. nur das zur Schwenkbarkeit notwendige Spiel vorhanden ist. Somit ist eine Bewegung der Laufwagenanordnung für eine Zugkraft oder wahlweise durch eine Schubkraft uneingeschränkt einsetzbar.

Insofern führt eine Zug- oder Schubbewegung nicht zu einem Auseinanderziehen oder Zusammenschieben der gesamten Laufwagenanordnung, wie dies im Stand der Technik in aller Regel der Fall ist. Somit kann eine deutlich verbesserte Gleichmäßigkeit in der Bewegung der Laufwagenanordnung erzielt werden. Gleichfalls ist es somit auch unproblematisch, wenn an zwei Antriebsstellen zugleich die Laufwagenanordnung erfasst wird. Aufgrund der unveränderlichen Länge der gesamten Laufwagenanordnung führt ein gleichmäßiger Antrieb an zwei Stellen auch zu einer konstanten Bewegungsform. Hingegen kann es im Stand der Technik leicht vorkommen, dass eine zusammengeschobene Laufwagenanordnung durch Erfassen mit einem zweiten Antrieb wiederum in die Länge gezogen wird oder wahlweise eine Stauchbewegung eintritt, die wiederum zu einem Ausbrechen aus der Bahnbewegung führen kann.

Besonders vorteilhaft ist es hierbei, wenn die Gelenkverbindung derart ausgeführt wird, dass neben axialen weiterhin auch radiale Kräfte innerhalb der Gelenkverbindung von einem Laufwagenelement zum anderen Laufwagenelement übertragen werden. Somit wird die Gestaltung der zum Tragen der Güter notwendigen Einrichtung erheblich vereinfacht. Durch die radiale Abstützung in den Gelenkelementen führen bei den Laufwagenelementen durch den Gütertransport auftretende, versetzt zur Führungsbahn wirkende Kräfte nicht zu einem Ausbrechen aus der Führungsbahn.

Besonders vorteilhaft ist es hierbei, wenn der Mittelpunkt der Gelenkverbindung einen möglichst geringen Abstand zu den Führungsflächen im Kontakt zwischen den Laufkörpern und der Führungsbahn aufweist. Durch diese Anordnung wird eine weitgehend gleichmäßige Bewegung der Laufwagenanordnung bzw. der einzelnen Laufwagenelemente entlang der Führungsbahn auch bei vorhandenen bogenförmigen Verläufen ermöglicht. Zudem führen die zu übertragenden Zug- und Schubkräfte im Verlauf von Bögen nicht oder nur unwesentlich zu Kräften, welche quer zur Achse der Führungsbahn beabstandet von der Führungsbahn liegen. Bei den aus dem Stand der Technik bekannten Anordnungen mit Kupplungsverbindungen beabstandet von der Führungsbahn kommt es dort hingegen, insbesondere bei einer Schubbewegung bzw. bei räumlichen Bahnverläufen, zu instabilen Laufbewegungen. Insofern eignen sich im Stand der Technik bekannte Ausführungsformen vorzugsweise lediglich für eine Zugbewegung bei einfachen räumlichen Bewegungsformen.

Insbesondere ist es diesbezüglich vorteilhaft, wenn - wie zuvor beschrieben - der Mittelpunkt der Gelenkverbindung innerhalb bzw. auf der Mittelachse der Führungsbahn bzw. des jeweiligen Laufkörpers angeordnet ist. Folglich erfolgt eine Positionierung der Gelenkverbindung innerhalb der Führungsbahn, welche es erstmalig ermöglicht, die Führungsbahn entlang ihrer Achse tordieren zu lassen. Somit kann beispielsweise eine helixförmige Bewegung der Laufwagenanordnung entlang der Führungsbahn realisiert werden. Derartige Bewegungsformen sind im Stand der Technik nahezu ausgeschlossen.

In vorteilhafter Ausführung bildet das erste Bauteil eine Laufkörperhälfte und das zweite Bauteil ein Laufkörperviertel, wobei das zweite Bauteil wiederum zweimal vorhanden ist und insofern gleichfalls eine Laufkörperhälfte bildet.

In einer ersten besonders vorteilhaften Variante zur Bildung des Kugelgelenks kann die Trennebene zwischen dem ersten und dem zweiten Bauteil bzw. zwischen der Kugelpfanne und dem Kugelhülsenabschnitt senkrecht zu einer Mittellängsachse des Laufwagenelements gelegt werden.

Besonders vorteilhaft ist es hierbei, wenn die Lagerung der Laufrollen gleichfalls in die Trennebene zwischen dem ersten und dem zweiten Bauteil gelegt wird. Somit wird es ermöglicht, dass in der Montage des zweiten Bauteils an das erste Bauteil zugleich ein Erfassen der zweiten Gelenkkugel und ein Befestigen der Laufrollen erfolgen.

Weiterhin ist es bei der Bildung eines Kugelgelenks vorteilhaft, wenn die Kugelpfanne eine im Wesentlichen stirnseitige Anlagefläche für die Gelenkkugel als zweites Gelenkelement des jeweils gelenkig zu verbindenden benachbarten Laufwagenelements bildet. Der Kugelhülsenabschnitt umgreift die Gelenkkugel und wird hierbei mit dem ersten Bauteil verbunden. Insofern erfolgt die Erzeugung einer Kugelgelenkverbindung zwischen dem ersten und zweiten Gelenkelement unter Einschließen der Gelenkkugel vom ersten und zweiten Bauteil mit der Kugelpfanne und dem Kugelhülsenabschnitt.

Zum Toleranzausgleich sowie zur Vermeidung eines Spiels innerhalb der Kugelgelenkverbindung ist es besonders vorteilhaft, wenn die Kugelpfanne im ersten Bauteil federn gelagert ist. Insofern ist es offensichtlich, dass die Kugelpfanne als separates Bauteil am ersten Bauteil angeordnet ist. Hierbei bedarf es keiner direkten Verbindung zwischen dem ersten Bauteil und der Kugelpfanne, sofern sichergestellt wird, dass die Kugelpfanne am Einbauort verbleibt. Dies wird vorteilhaft zugleich dadurch sichergestellt, dass die Kugelpfanne von einem Federelement, welches sich im ersten Bauteil abstützt, gegen die Gelenkkugel des folgenden Laufwagenelements gedrückt wird. Hierbei ist es vorteilhaft, wenn die Kugelpfanne als Bauteil in einer Führung am ersten Bauteil gelagert ist und somit lediglich eine Beweglichkeit in Richtung auf die zu erfassende Gelenkkugel aufweist.

In einer zweiten Ausführungsvariarite für die Kugelgelenkverbindung wird die Trennebene zwischen Kugelpfanne und Kugelhülsenabschnitt in einer Mittellängsachse des Laufwagenelements angeordnet. D.h. die Trennung zwischen dem ersten, mit der Verbindungsstrebe verbundenen Bauteil und dem zweiten Bauteil erfolgt parallel zur Führungsbahn. Dies ist dahingehend von Vorteil, als dass somit das zweite Bauteil lediglich die Gelenkkugel des folgenden Laufwagenabschnitts umgreifen und keinerlei weitere Funktionen - wenngleich dies ebenso möglich ist - erfüllen muss. Somit kann das zweite Bauteil sehr einfach gehalten werden und die Verbindung der Laufwagenelemente untereinander gestaltet sich sehr einfach mittels Einlegen der Gelenkkugel in die Kugelpfanne und Aufsetzen und Befestigen des zweiten Bauteils mit dem Kugelhülsenabschnitt.

Die Mittellängsachse des Laufwagenelements bezieht sich hierbei auf eine Linie im Wesentlichen parallel zur Führungsbahn, welche mittig durch die Einheit aus Laufkörper, Verbindungsstrebe und Gelenkelemente verläuft. Diese muss hierbei weder exakt durch den Volumenmittelpunkt noch durch den Scherpunkt verlaufen.

In beiden Ausführungsvarianten wird in vorteilhafter Weise eine Kugelgelenkverbindung erzeugt, wobei mittels Fügung zweier Kugelschalenanteile das erste Gelenkelement erzeugt wird, wobei das kugelförmige zweite Gelenkelement umfasst wird. Hierdurch wird eine spielfreie Gelenkverbindung geschaffen, wobei die notwendige Schwenkbarkeit gewährleistet ist und dennoch axiale und radiale Kräfte übertragen werden können.

Zur Erzeugung einer möglichst großen Flexibilität hinsichtlich der Gestaltung der Transportvorrichtung, insbesondere der Laufwagenanordnungen, ist es besonders vorteilhaft, wenn der Laufkörper und/oder das zweite Gelenkelement an der Verbindungsstrebe, insbesondere lösbar, befestigt sind. Einerseits ermöglicht diese Gestaltung die Ausführungsform, bei der das zweite Bauteil des Laufkörpers mit dem Kugelhülsenabschnitt umgebend hinter dem zweiten Gelenkelement bzw. der Gelenkkugel angeordnet ist und andererseits mit dem ersten Bauteil des Laufkörpers verbunden ist.

Wesentlich ist die Ermöglichung einer Variation der Transportvorrichtung auf Grundlage einer begrenzten Teilevielfalt. Insbesondere können somit flexible Ausführungsformen, beispielsweise hinsichtlich der Länge der Verbindungsstrebe bzw. des Laufwagenelements, geschaffen werden. Mittels einer kleinen Variation von Verbindungsstreben bzw. Komponenten kann eine große Variation an Ausführungsformen erzeugt werden für: verschiedene Belastungen mittels Ausführung der Laufkörper, verschiedene Bogenradien der Führungsbahnen mittels Länge der Verbindungsstreben, verschiedene Güter mittels entsprechender Wahl der Güterträger und deren Anbindung an die Laufwagenelemente. Im Ergebnis wird neben der Ermöglichung einer großen Variation in der Verwendung ein Kostenvorteil in der Herstellung erreicht.

Vorteilhaft ist es weiterhin, wenn die Verbindungsstrebe zumindest zwei Verbindungsteilelemente aufweist, die miteinander verbindbar sind. Insofern wird durch diese Variation gleichfalls eine Flexibilität hinsichtlich der Ausführungsform der Laufwagenelemente erreicht. Hierbei ist es beispielsweise möglich, ein erstes Verbindungsteilelement fest oder integral mit dem Laufkörper und das zweite Verbindungsteilelement fest oder integral mit der Gelenkkugel als zweites Gelenkelement zu verbinden. Die flexible Trennung der Laufwagenelemente erfolgt somit innerhalb der Verbindungsstrebe.

Besonders vorteilhaft ist die Verbindung, wenn die Sicherung der lösbaren Verbindung mittels eines Schnellverschlusses oder vorzugsweise durch eine Rastverbindung erfolgt. Somit kann zum einen die Montage der Laufwagenanordnung in einfacher und schneller Weise durch Fügung der Einzelkomponenten erfolgen. Zum anderen ist gleichfalls eine Änderung der Laufwagenanordnung durch Trennung an der lösbaren Verbindung ohne weiteren Aufwand möglich. Somit kann flexibel auf einen sich ändernden Bedarf innerhalb der Transportvorrichtung reagiert werden.

Zur Realisierung eines Antriebs ist es vorteilhaft, wenn mindestens ein in der Führungsbahn eingreifender Reibriemen- oder Reibradantrieb angeordnet wird. Hierbei werden notwendigerweise an den Laufwagenelementen Antriebsflächen vorgesehen. Die Antriebselemente des Reibriemen- bzw. des Reibradantriebs können hierbei mittels eines Friktionsantriebs die notwendige Kraftübertragung bewirken. Somit ist eine sowohl Zug- als auch Schubbewegung hinsichtlich der Laufwagenanordnung möglich.

Alternativ ist es zur Realisierung eines Antriebs besonders vorteilhaft, wenn mindestens ein in der Führungsbahn eingreifender Zahnriemen- oder Zahnradantrieb angeordnet wird. Hierbei sind ebenso an den Laufwagenelementen entsprechende Antriebsflächen vorzusehen. Die Antriebselemente des Zahnriemen- bzw. des Zahnradantriebs können hierbei mittels eines Zahnantriebs die notwendige Kraftübertragung bewirken. Somit ist gleichfalls eine Zug- als auch Schubbewegung hinsichtlich der Laufwagenanordnung möglich.

Zur Vermeidung einer zusätzlichen Belastung der Lagerung der Laufwagenanordnung innerhalb der Führungsbahn ist es besonders vorteilhaft, wenn zwei zur Führungsbahn symmetrisch angeordnete Reibriemen- oder Reibradantriebe bzw. Zahnriemen- oder Zahnradantriebe vorgesehen sind. Durch die gegenüberliegende Anordnung der Antriebe werden antriebsbedingte Querkräfte auf die Laufwagenelemente im Wesentlichen eliminiert. Hierbei ist es besonders vorteilhaft, wenn die durch die beiden Antriebe definierte Antriebsebene mit der Mittellängsachse der Führungsbahn bzw. Laufwagenelemente übereinstimmend angeordnet ist.

Es ist offensichtlich, dass je nach Gestaltung der Führungsbahn, insbesondere hinsichtlich der Länge, eine unterschiedliche Anzahl von Antrieben erforderlich sein kann bzw. sinnvoll ist. Hierbei kann es mitunter ausreichend sein, einen einzelnen Antrieb bzw. ein einzelnes Antriebspaar vorzusehen. Ebenso kann es vorkommen, dass eine Vielzahl von Antriebspaaren einzusetzen ist. Die Anzahl wird sich insofern zum einen nach der Länge der Führungsbahn, des Weiteren nach der Anzahl und der Länge der einzelnen Laufwagenanordnungen sowie nach der geometrischen Gestaltung der Führungsbahn richten.

Besonders vorteilhaft ist die Verwendung von zumindest zwei unabhängig steuerbaren Antrieben, wodurch es ermöglicht wird, dass eine Laufwagenanordnung über den Verlauf der Führungsbahn auf unterschiedliche Geschwindigkeiten beschleunigt bzw. abgebremst wird. Insofern ist es beispielsweise möglich, im Verlauf von Bögen eine geringere Geschwindigkeit zu wählen als auf langen geraden Streckenabschnitten.

Zur Übertragung der notwendigen Antriebskraft von dem Reibriemen- bzw. Reibradantrieb / Zahnriemen- bzw. Zahnradantrieb auf die einzelnen Laufwagenelemente ist es besonders vorteilhaft, wenn der Reibriemen bzw. das Reibrad / Zahnriemen- bzw. Zahnradantrieb als Antriebselement senkrecht zur Führungsbahn elastisch gelagert ist. Insofern kann eine elastische Kraft auf die Antriebsstelle aufgebracht und die notwendige Reibkraft bzw. ein sicherer Eingriff der Zähne gewährleistet werden.

In vorteilhafter Weise werden zu diesem Zweck die Antriebsflächen der Antriebselemente im Falle von Reibriemen- bzw. Reibradantrieb als Keilnuten ausgebildet.

Beim Einsatz eines Zahnriemen- bzw. Zahnradantriebs ist es besonders vorteilhaft, wenn zumindest an der Verbindungsstrebe ein Zahnstangenabschnitt angeordnet ist. Somit wird sichergestellt, dass über einen - wenn auch begrenzten - Weg ein Vortrieb der Laufwagenanordnung durch den Zahnriemen- bzw. den Zahnradantrieb erfolgt. Weiterhin ist es vorteilhaft, wenn sich der Zahnstangenabschnitt der Verbindungsstrebe am Laufkörper fortsetzt.

Zur Verdeutlichung der erfindungsgemäßen Lösung ist eine besonders vorteilhafte Ausführungsform in den beigefügten Figuren skizziert.

Es zeigen:
- Fig. 1: einen Abschnitt einer beispielhaften Ausführungsform einer Transportvorrichtung 01 mit einer Laufwagenanordnung 15 sowie zweier Güterträger 61;
- Fig. 2: einen beispielhaften Verlauf der Führungsbahn 03 für eine Transportvorrichtung 01 gemäß Fig. 1;
- Fig. 3: eine beispielhafte Laufwagenanordnung 15 zur Transportvorrichtung 01 gemäß Fig. 1;
- Fig. 4: eine perspektivische Ansicht eines Laufwagenelements 16 der Laufwagenanordnung 15 zur Transportvorrichtung 01;
- Fig. 5: eine weitere perspektivische Ansicht des Laufwagenelements 16;
- Fig. 6: das Laufwagenelement 16 als Explosionsansicht;
- Fig. 7: eine Ansicht in Längsrichtung der Mittelachse auf ein Laufwagenelement 16 in der Führungsschiene 05 zur Ausführungsform gemäß Fig. 1;
- Fig. 8: eine perspektivische Ansicht eines Doppel-Laufwagenelements 17;
- Fig. 9: eine alternative Ausführungsform einer Transportvorrichtung 101 mit Achtkantprofil 105;
- Fig. 10: eine alternative Ausführungsform einer Transportvorrichtung 201 mit drei Laufrollen 222;
- Fig. 11: einen Abschnitt der Transportvorrichtung 01 in einer vertikalen Schnittdarstellung mit waagerechten geraden Bahnabschnitt 09a;
- Fig. 12: einen Abschnitt der Transportvorrichtung 01 in einer vertikalen Schnittdarstellung mit vertikalen Bahnbogen 09d;
- Fig. 13: einen Abschnitt der Transportvorrichtung 01 in einer horizontalen Schnittdarstellung mit waagerechten Bahnbogen 09c;
- Fig. 14: eine Antriebsanordnung 51 zum Antrieb der Laufwagenanordnungen 15 in der Verwendung gemäß der Ausführungsform aus Fig. 1;
- Fig. 15: in Ergänzung zur Fig. 14 eine Ansicht im Teilschnitt auf die Antriebsanordnung 51;
- Fig. 16: eine beispielhafte Ausführungsform für Segmentverbinder 10 zur Verbindung einzelner Schienensegmente 09 der Ausführungsform gemäß Fig. 1.

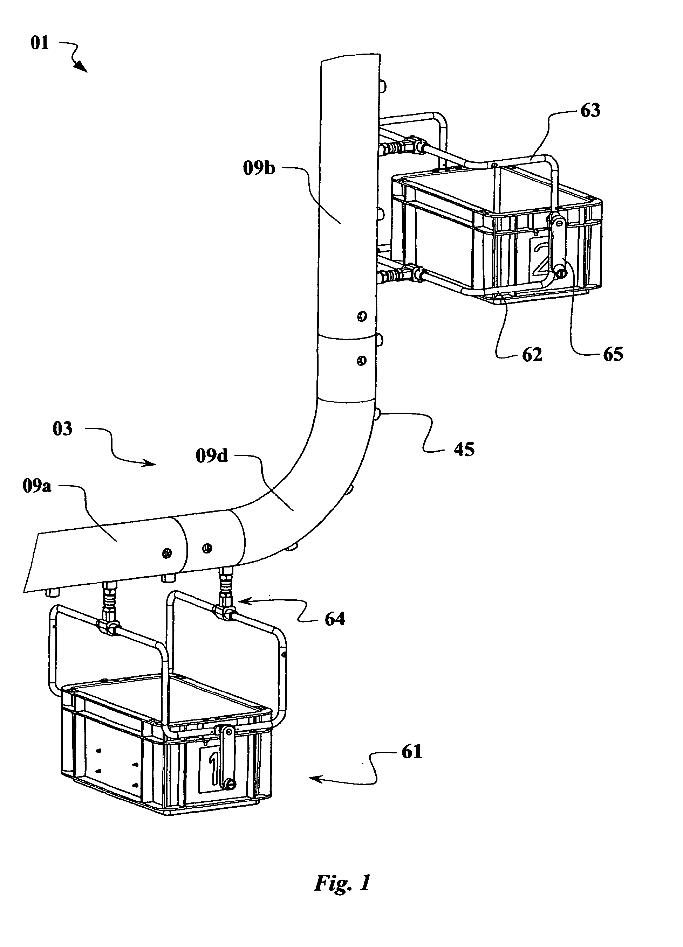

In der **Figur 1** wird eine erfindungsgemäße Transportvorrichtung 01 in einer beispielhaften Ausführungsform skizziert. Hierbei ist zur Verdeutlichung lediglich ein Abschnitt der gesamten Transportvorrichtung 01 zu erkennen. Hierbei handelt es sich um einen Eckbereich, bei dem die Führungsbahn 03 von einer Horizontalen in eine Vertikale wechselt. Zu erkennen sind die verschiedenen Segmente 09 der Führungsbahn 03 bzw. Führungsschiene 05 mit einem waagrechter Bahnabschnitt 09a, einem vertikalen Bahnbogen 09c sowie einem vertikaler geradlinigen Bahnabschnitt 09b. Beidseitig setzt sich die Führungsbahn 03 entsprechend fort. In der Führungsbahn 03 gelagert befindet sich (nicht sichtbar) die Laufwagenanordnung 15. Von dieser 15 ragen nach unten bzw. im vertikalen Abschnitt nach rechts die Lastträger 45 aus der Führungsbahn 03 hervor. Hierbei ist beispielhaft skizziert, wie die Anbringung eines Güterträgers 61 erfolgt. An zwei beabstandeten Lastträgern 45 wird jeweils eine Schnellverschluss-Gelenkverbindung 64 angebracht. An dieser wiederum schließen sich jeweils die erste Gelenkstrebe 62 sowie die zweite Gelenkstrebe 63 an. Hierbei sind beide Gelenkstreben 62, 63 jeweils in einer Bügelform ausgeführt. Weiterhin zu berücksichtigen ist, dass die Gelenkstreben 62, 63 wiederum gelenkig am Güterträger 61 angebracht sind. Insofern kann der Güterträger 61, wie aus den beiden verschiedenen Positionen zu erkennen, an den Gelenkstreben 62, 63 frei herabschwenken und jeweils die Waagrechte einnehmen. Somit wird der sichere Transport von Gütern im Güterträger 61 sichergestellt. Weiterhin zu erkennen ist der mit dem Güterträger 61 verbundene Trägerschwenkhebel 65, mittels dem über z.B. eine Kulissenführung oder einen entsprechenden Antrieb ein Ausschwenken des Inhalts des Güterträgers 61 stattfinden kann.

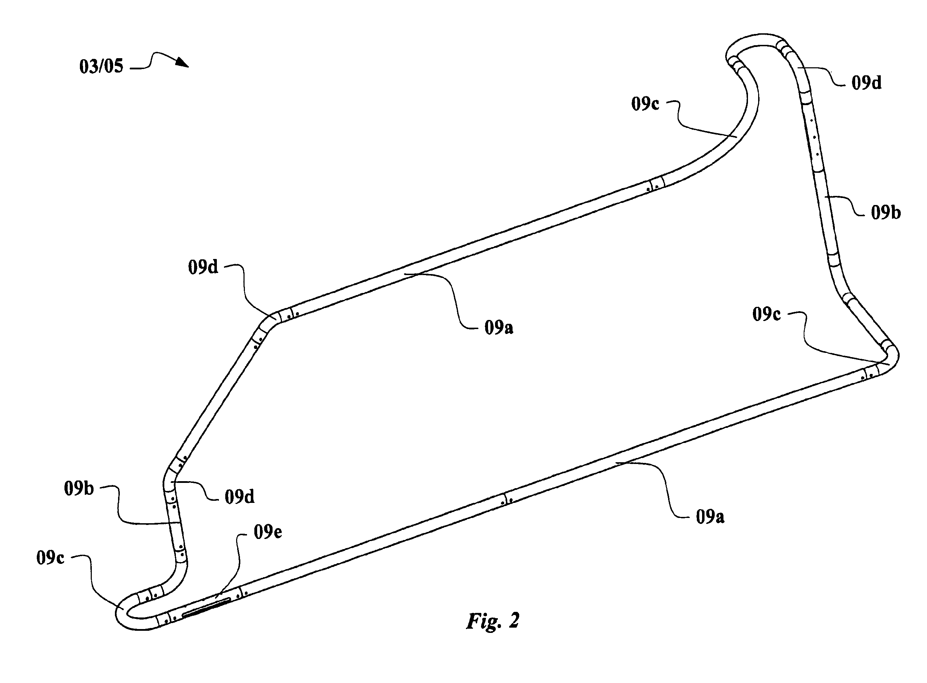

In der **Figur 2** ist beispielhaft ein möglicher Verlauf der Führungsbahn 03 skizziert. Hierbei weist die in der Transportvorrichtung 01 eingesetzte Führungsschiene 05 mehrere Schienensegmente 09 auf, welche (wie zu erkennen ist) nicht nur sowohl waagrechte Abschnitte 09a und waagrechte Bogenabschnitte 09c aufweist, sondern vielmehr auch vertikale geradlinige Abschnitte 09b bzw. schräg verlaufende Abschnitte oder vertikale Bogenabschnitte 09d. Weiterhin zu erkennen ist, dass im unten links dargestellten Bereich ein geschlitztes Segmentstück 09e vorhanden ist. Dieses Antriebssegment 09e dient zur Anbringung einer entsprechenden Antriebsanordnung 51 zum Vorschub der Laufwagenanordnung 15.

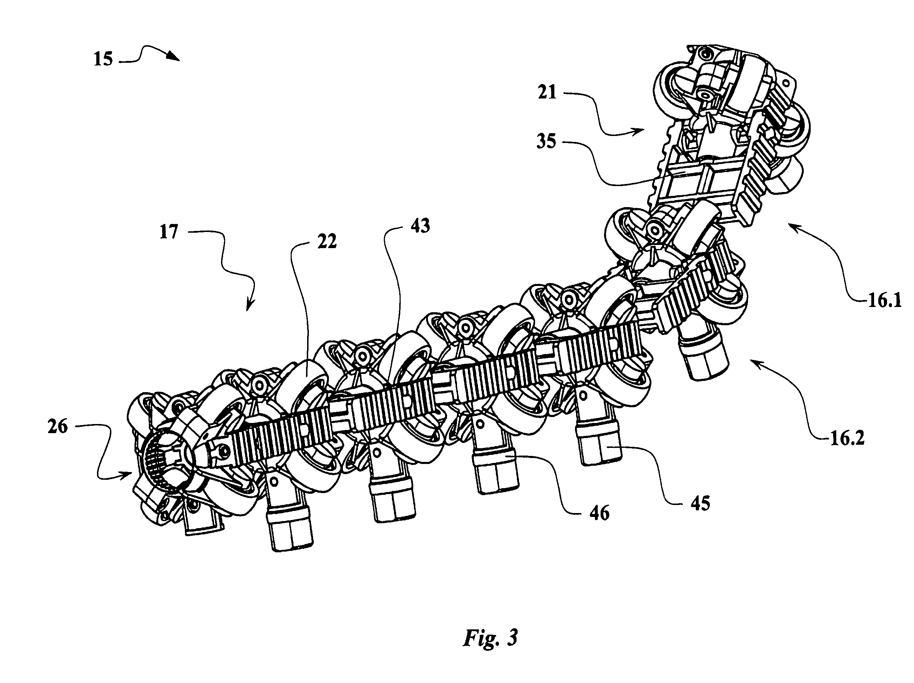

In der **Figur 3** ist nunmehr eine beispielhafte Ausführungsform einer Laufwagenanordnung 15 zu erkennen. Diese besteht im vorliegenden Fall aus fünf regulären Laufwagenelementen 16 sowie am links dargestellten Ende einem Doppel-Laufwagenelement 17. Jedes der regulären Laufwagenelemente 16 weist hierbei einen Laufkörper 21 auf, welcher wiederum am Umfang verteilt vier Laufrollen 22 besitzt. Hingegen besitzt zur Stabilität der Laufwagenanordnung 15 innerhalb der Führungsbahn 03 das Doppel-Laufwagenelement zwei Laufkörper 21. Zu erkennen ist des Weiteren der mögliche räumliche Verlauf bzw. die Beweglichkeit der Laufwagenanordnung 15 mittels der gelenkigen Verbindung der einzelnen Laufwagenelemente 16, 17. Weiterhin zu erkennen ist (am vorderen Ende der Laufwagenanordnung 15) das im Laufkörper 21 vorhandene erste Gelenkelement 26 in Form einer Kugelaufnahme sowie beidseitig aller Laufwagenelemente 16, 17 die Zahnstangen 43 zum Antrieb der Laufwagenanordnung 15. Jeweils an einem Laufwagenelement 16, 17 ist ein Lastträger 45 mit darauf befindlicher Führungsrolle 46 vorhanden. Es ist offensichtlich, wie die Laufwagenanordnung 15 mit den Laufwagenelementen 16, 17 innerhalb der Führungsbahn 03 liegt und hierbei lediglich die Lastträger 45 aus der Führungsschiene 05 herausragen.

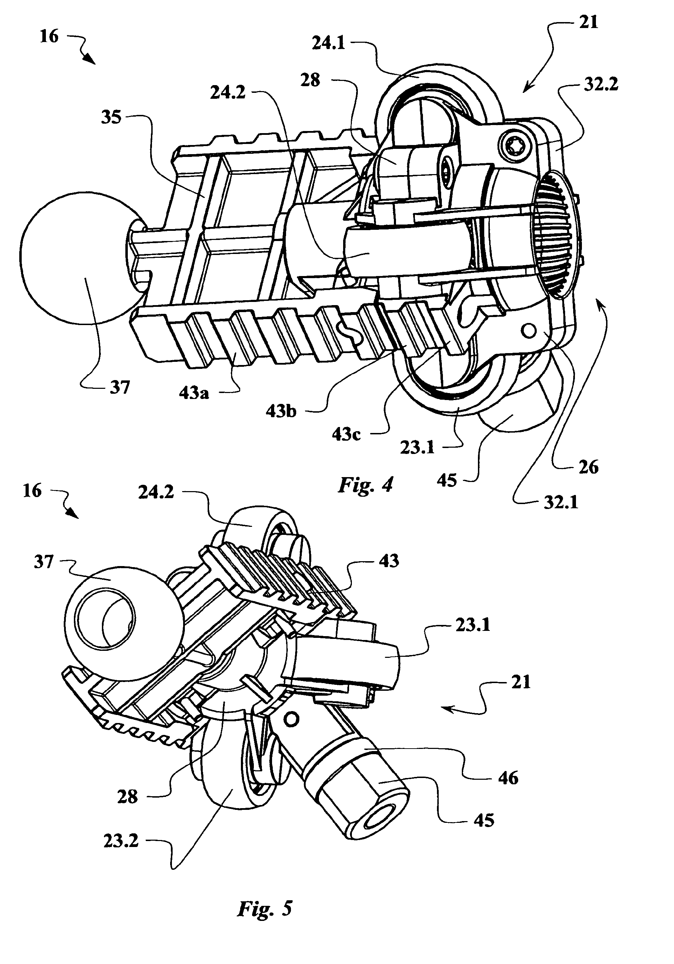

In der **Figur 4** wird eine perspektivische Ansicht einer vorteilhaften Ausführungsform eines Laufwagenelements 16 zur Transportvorrichtung 01 skizziert. Zu erkennen ist der grundlegende Aufbau des Laufwagenelements 16 mit zunächst einmal dem Laufkörper 21, der Verbindungsstrebe 35 sowie dem zweiten Gelenkelement bzw. der Gelenkkugel 37. Weiterhin ist zu erkennen, dass in dieser Ausführungsform der Laufkörper 21 mehrgeteilt aufgebaut ist und hierbei aus einem ersten Bauteil bzw. der Laufkörperhälfte 28 und zweimal einem zweiten Bauteil bzw. jeweils dem Laufkörperviertel 32.1 und 32.2 gebildet wird. Innerhalb des Laufkörpers ist ansatzweise das erste Gelenkelement 26 in Form einer Kugelhülse zu erkennen. Weiterhin dargestellt sind die Laufrollen 22, wobei die unteren Laufrollen feststehende Laufrollen 23.1 und 23.2 bilden (Anmerkung: feststehend bezieht sich auf die Drehachse) und die oberen Laufrollen als federnd gelagerte Laufrollen 24.1 und 24.2 ausgeführt sind. Die gefederte Lagerung bezieht sich in dieser Ausführung darauf, dass die Laufrollen 24 bei Belastung der Laufrollen 24 in der Anlage an der Führungsbahn 03 in Richtung zur Mittellängsachse 19 des Laufwagenelements 16 ausweichen können. Diesbezüglich bedarf es nicht zwingend einer Anordnung einer beispielsweise Druckfeder oder dergleichen, sondern vielmehr reicht eine elastische Nachgiebigkeit in der Lagerstelle. Ebenso ist es im einfachsten Fall denkbar, die Nachgiebigkeit durch eine elastische Ausführungsform der eigentlichen Laufrollen zu realisieren. Weiterhin zu erkennen ist die beidseitig des Laufwagenelements 16 angeordnete Zahnstange 43 bestehend jeweils aus den drei Teilabschnitten an der Verbindungsstrebe 43a, an der Laufkörperhälfte 43b sowie am Laufkörperviertel 43c.

Die **Figur 5** zeigt das Laufwagenelement 16 in weiterer perspektivischer Ansicht. Hierbei vorteilhaft zu erkennen ist der Lastträger 45, auf welchem die Führungsrolle 46 montiert ist. Hierbei ist der Lastträger 45 unterhalb des Laufkörpers 21 angeordnet und mit diesem 21 fest verbunden.

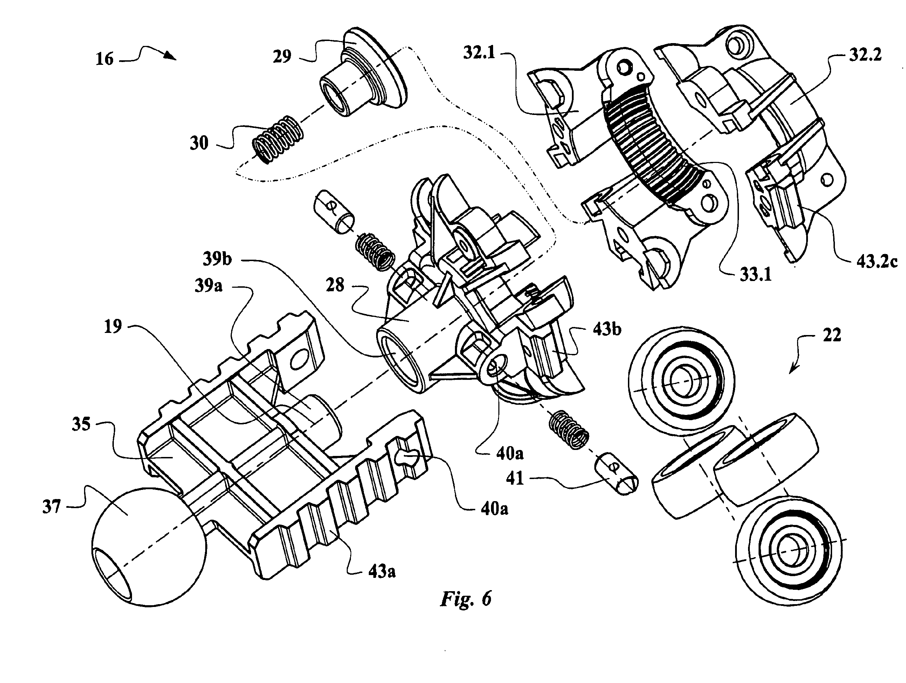

Der modulare Aufbau des Laufwagenelements 16 wird besonders vorteilhaft in **Figur 6** offensichtlich. Zu erkennen ist die einstückige Ausführungsform der Verbindungsstrebe 35 mit dem angebundenen zweiten Gelenkelement bzw. der Gelenkkugel 37. Weiterhin ist zu erkennen, dass die Verbindungsstrebe 35 beidseitig den Zahnstangenabschnitt 43a aufweist. In der Verbindung zum Laufkörper 21 weist die Verbindungsstrebe 35 einen Sockel 39a einer Steckverbindung auf. Weiterhin dienen zur Sicherung der Steckverbindung Aussparungen 40a für eine Rastverbindung. Komplementär hierzu weist das erste Bauteil des Laufkörpers bzw. die Laufkörperhälfte 28 eine Hülse 39b der Steckverbindung auf. Weiterhin ist in der Laufkörperhälfte 28 beidseitig ein federnd gelagerter Rastbolzen 41 in der Aufnahme 40a für die Rastverbindung gelagert. Somit wird die vorteilhafte und einfache Verbindung zwischen dem Laufkörper 21 und der Verbindungsstrebe offensichtlich. Insofern bedarf es zur Montage der Verbindungsstrebe 25 am Laufkörper 21 lediglich eines Steck- und Rastvorgangs.

Vorteilhaft zu erkennen ist der mehrteilige Aufbau des Laufkörpers mit der Laufkörperhälfte 28 und den beiden Laufkörpervierteln 32.1 und 32.2. Hierbei weisen die Laufkörperviertel 32.1 bzw. 32.2 jeweils einen Kugelhülsenabschnitt 33.1 und 33.2 (nicht erkennbar) auf. Die in dieser Ausführungsform vorgesehene Kugelpfanne 29 wird zu diesem Zwecke federnd mittels des Federelements 30 innerhalb des ersten Bauteils bzw. der Laufkörperhälfte 28 gelagert. Somit wird offensichtlich, dass bei Zusammenfügen des Laufkörpers 21 das erste Gelenkelement 26 gebildet wird und ein zweites Gelenkelement bzw. eine Gelenkkugel 37 eines folgenden Laufwagenelements umfasst wird. Mittels des Federelements 30 wird ein Spiel innerhalb der Gelenkverbindung eliminiert.

Weiterhin vorteilhaft bei dieser Ausführungsform ist die Anordnung der Laufrollen 22 mit deren Achsen in der Trennebene zwischen der Laufkörperhälfte 28 und den Laufkörpervierteln 32. Insofern werden bei Montage der Laufkörperviertel 32 an die Laufkörperhälfte 28 mit Umfassen der Gelenkkugel 37 des folgenden Laufwagenelements zugleich die Laufrollen 22 montiert. Zu berücksichtigen ist, dass die Trennebene zwischen dem ersten Bauteil bzw. der Laufkörperhälfte 28 und dem zweiten Bauteil bzw. den Laufkörpervierteln 32 nicht eine geometrische Ebene sein muss, sondern vielmehr Absätze und Sprünge aufweisen kann, sofern sichergestellt wird, dass in der Montage des Laufkörpers 21 mit der Aufnahme der Gelenkkugel 37 in ersten Gelenkelement 26 zugleich die Laufrollen montiert werden.

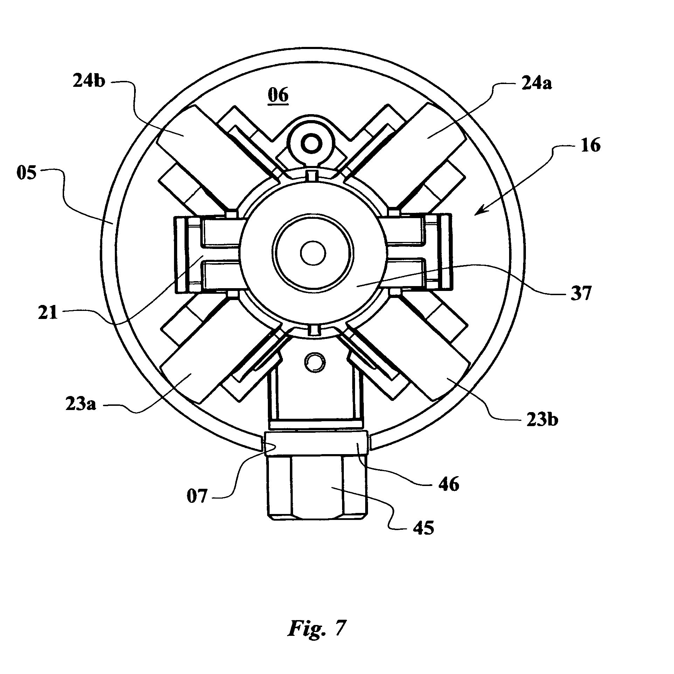

Zur Verdeutlichung der Lage der Laufwagenanordnung bzw. des Laufwagenelements 16 innerhalb der Führungsbahn bzw. Führungsschiene 05 skizziert die **Figur 7** ein reguläres Laufwagenelement 16 innerhalb der Führungsschiene 05. Zu erkennen ist die Lagerung des Laufwagenelements 16 mittels des Laufkörpers 21 innerhalb des Führungsquerschnitts 06. Hierbei rollen die zwei feststehenden Laufrollen 23a, 23b sowie die zwei federnd gelagerten Laufrollen 24a und 24b innerhalb der Führungsschiene 05. Mittig befindet sich die Gelenkkugel 37 als zweites Gelenkelement der Laufwagenanordnung 16. Weiterhin ist zu erkennen, wie der Lastträger 45 die Führungsschiene 05 im Bereich des Schlitzes 07 durchdringt. Zur besseren Lagerung und Vermeidung von Gleitreibungen ist auf dem Lastträger 45 eine Führungsrolle 46 drehbar gelagert angebracht. Es ist offensichtlich, wie die rotatorische Lage des Laufwagenelements 16 um die Mittellängsachse 19 durch die Zuordnung der Führungsrolle 46 innerhalb des Schlitzes 07 definiert wird.

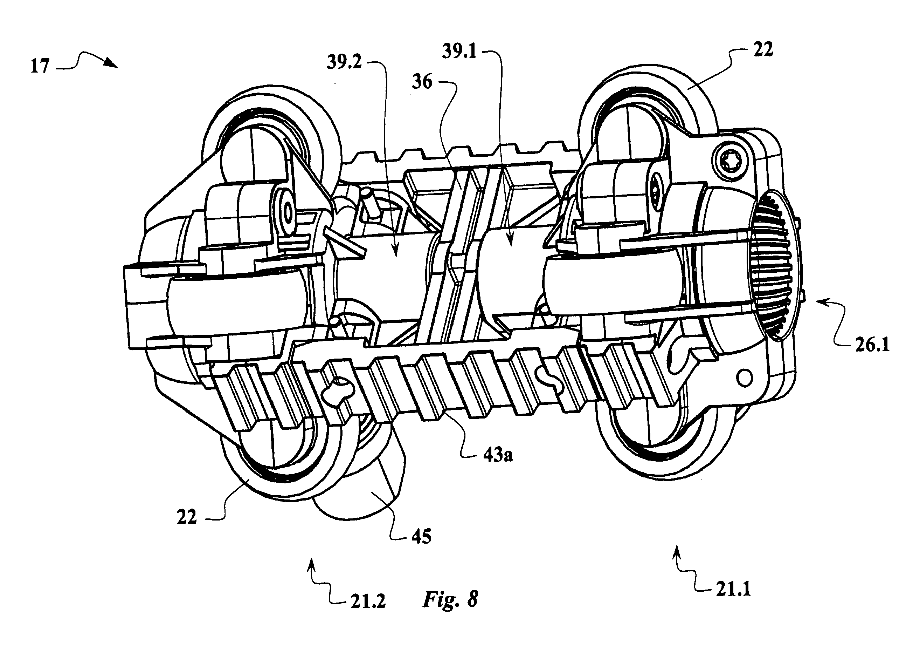

In **Figur 8** ist als ergänzendes Element innerhalb der Transportvorrichtung 01 ein Doppel-Laufwagenelement 17 skizziert. Dieses weist einen zunächst einmal mit dem regulären Laufwagenelement 16 vergleichbaren Aufbau auf. Insofern gibt es gleichfalls auf erster Seite einen ersten Laufkörper 21.1, der entsprechende Laufrollen 22 und ein erstes Gelenkelement 26.1 aufweist. Hiermit verbunden ist mit gleicher Art der Steckverbindung 39.1 eine Doppel-Verbindungsstrebe 36. Diese weist ebenso wie die reguläre Verbindungsstrebe 35 den Zahnstangenabschnitt 43a auf. Entgegen der regulären Ausführungsform des Laufwagenelements 16 ist nunmehr bei diesem Doppel-Laufwagenelement 17 ein zweiter Laufkörper 21.2 am zweiten Ende angeordnet. Dieser ist vorteilhaft im Wesentlichen identisch zum ersten Laufkörper 21.1 ausgeführt und mit gleicher Steckverbindung 39.2 mit der Doppel-Verbindungsstrebe 36 verbunden. Zunächst einmal unerheblich ist es hierbei, dass nur ein Laufkörper 21.2 einen Lastträger 45 aufweist, während hingegen der andere Laufkörper 21.1 diesen nicht umfasst.

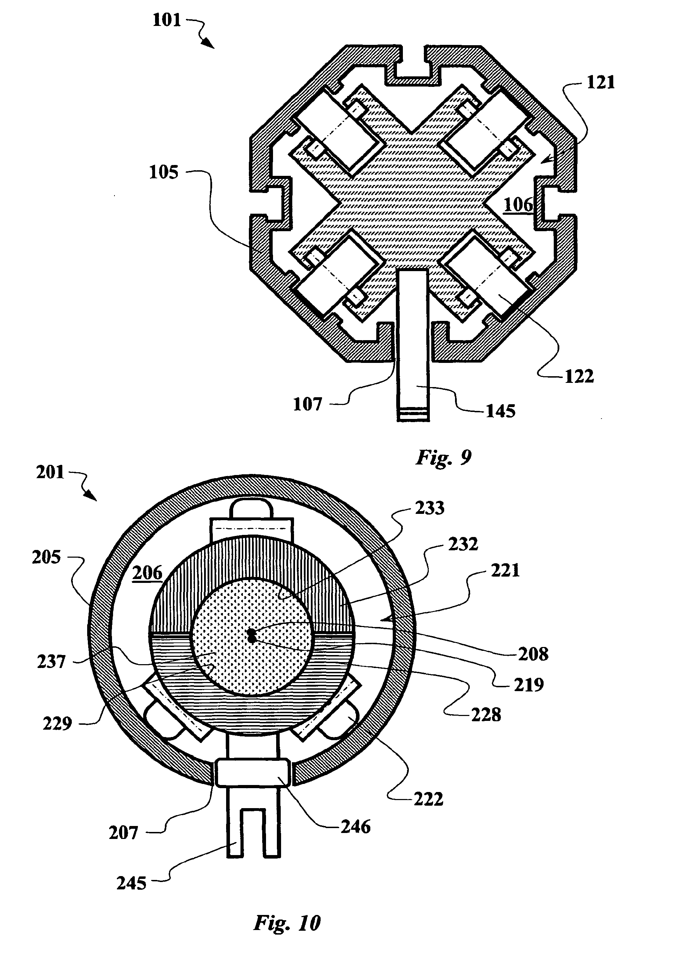

In der **Figur 9** wird beispielhaft eine alternative Ausführungsform einer Transportvorrichtung 101 skizziert. Entgegen der Ausführungsform bei der Transportvorrichtung 01 weist hierbei die Führungsbahn eine achteckige Führungsschiene 105 auf. Gleichfalls wie bei der Ausführungsform der Transportvorrichtung 01 befindet sich ein Laufkörper 121 innerhalb des Führungsquerschnitts 106 der Führungsschiene 105 und liegt mit vier Laufrollen 122 an den jeweiligen Führungsflächen an. Weiterhin skizziert ist der Lastträger 145, welcher sich nach unten durch einen Schlitz 107 in der Führungsschiene 105 erstreckt.

Ein weiteres Ausführungsbeispiel einer Transportvorrichtung 201 skizziert die **Figur 10** mit wiederum einer kreisförmigen Führungsschiene 205, in welcher der Laufkörper 221 angeordnet ist. In diesem Falle weist der Laufkörper 221 drei Laufrollen 222 auf. Beispielhaft skizziert ist weiterhin eine alternative Trennung des Laufkörpers 221 mit einem ersten Bauteil als Laufkörperunterteil 228 und einem zweiten Bauteil als Laufkörperoberteil 232. Diese umfassen mittels der unten liegenden Kugelpfanne 229 und dem oben liegenden Kugelhülsenabschnitt 233 die Gelenkkugel 237 bzw. das zweite Gelenkelement des folgenden Laufwagenelements. Weiterhin skizziert ist wiederum der Lastträger 245 mit einer Führungsrolle 246, welche drehbar auf dem Lastträger 245 gelagert ist und sich hierbei innerhalb des Schlitzes 207 der Führungsschiene abstützt und somit die rotatorische Lage des Laufwagenelements vorgibt.

Weiterhin wird beispielhaft skizziert, dass der Laufkörper 221 innerhalb des Führungsquerschnitts 206 gebildet durch die Führungsschiene 205 liegt, wobei der Mittelpunkt der Führungsschiene 205 bzw. des Führungsquerschnitts 206 als Mittelachse der Führungsschiene 208 oberhalb des Mittelpunkts bzw. der Mittellängsachse 219 des Laufkörpers 221 bzw. des jeweiligen Laufwagenelements liegt. Insofern ist offensichtlich, dass der Mittelpunkt der Mittelachse 208 der Führungsschiene nicht übereinstimmen muss mit der Mittellängsachse 219 des Laufwagenelements. Jedoch ist es hinsichtlich der Bahnführung und des gleichmäßigen Verlaufs von besonderem Vorteil, wenn die Mittellängsachse 219 des Laufwagenelements mit der Mittelachse 208 der Führungsschiene weitgehend übereinstimmt.

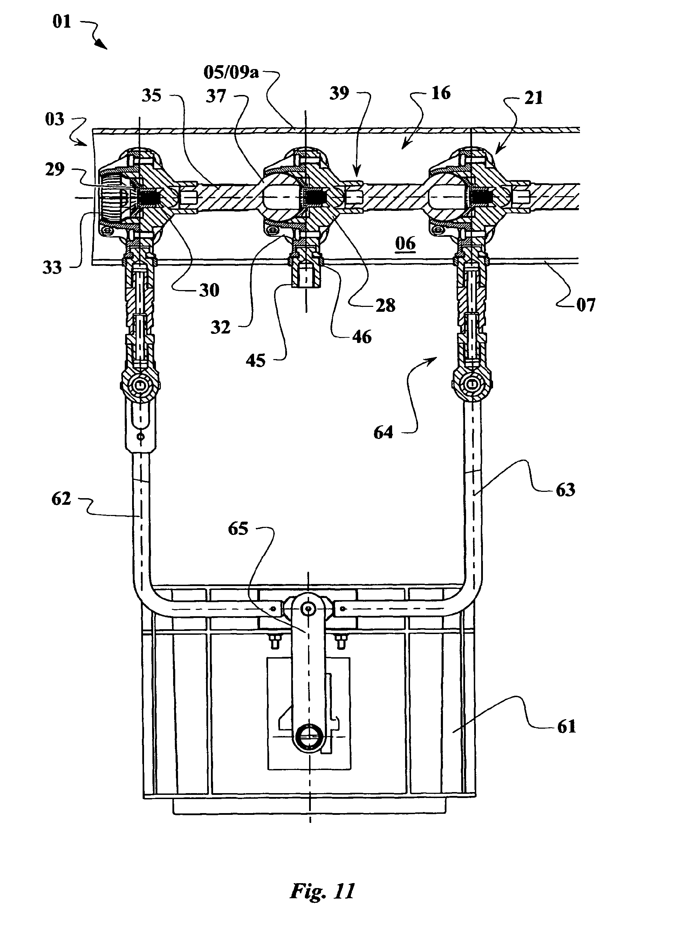

In **Figur 11** ist beispielhaft in einem vertikalen Schnitt ein waagrechter Abschnitt der Transportvorrichtung 01 skizziert. Zu erkennen ist zunächst einmal die Führungsschiene 05 bzw. der waagrechte Bahnabschnitt 09a, welcher die Führungsbahn 03 bildet. Innerhalb dieser liegt die Laufwagenanordnung 15 mit den skizzierten Laufwagenelementen 16. Hierbei zu erkennen ist die Zuordnung der Laufwagenelemente 16 zueinander mit den Laufkörpern 21 und den Verbindungsstreben 35. Weiterhin ist zu erkennen, wie die Gelenkkugel 37 eines Laufwagenelements 16 vom Gelenkelement 26 eines folgenden Laufwagenelements 16 mit der Kugelpfanne 29 und der Kugelhülsenabschnitte 33 umfasst wird. Unterseitig befindet sich bei der Führungsschiene 05 der Schlitz 07, durch welchen der Lastträger 45 herausragt. Dieser ist mittels einer Führungsrolle 46 innerhalb des Schlitzes 07 geführt. Am Lastträger angebunden ist eine Schnellverschluss-Gelenkverbindung 64. Diese 64 weist zum einerseits einen Schnellverschluss auf und zum anderen ein mehrfach bewegliches Gelenk, welches sowohl eine Drehung als auch ein Schwenken zulässt. Unterhalb der Schnellverschluss-Gelenkverbindung 64 schließt bei einem ersten Laufwagenelement 16 die erste Gelenkstrebe 62 und bei einem anderen Laufwagenelement 16 die zweite Gelenkstrebe 63 an. Diese 62, 63 sind wiederum gelenkig bzw. schwenkbar mit dem eigentlichen Güterträger 61 verbunden. Insofern führt eine räumliche Bahnbewegung zum freien Herabhängen des Güterträgers 61, so dass dieser immer in der Waage verbleibt. Ergänzt wird diese Ausführungsform durch einen vorteilhaften Trägerschwenkhebel 65, welcher sich vor den Gelenkstreben 62 ,63 befindet, jedoch fest mit dem Güterträger 61 verbunden ist. Hierbei ist es möglich, dass durch die Hebelwirkung ein exzentrischer Antrieb oder alternativ eine Kulissenbahnführung ausgebildet wird, mittels derer der Güterträger 61 gesteuert geschwenkt und somit umgekippt wird. Somit ist ein Entleeren von im Güterträger 61 befindlichen Material möglich.

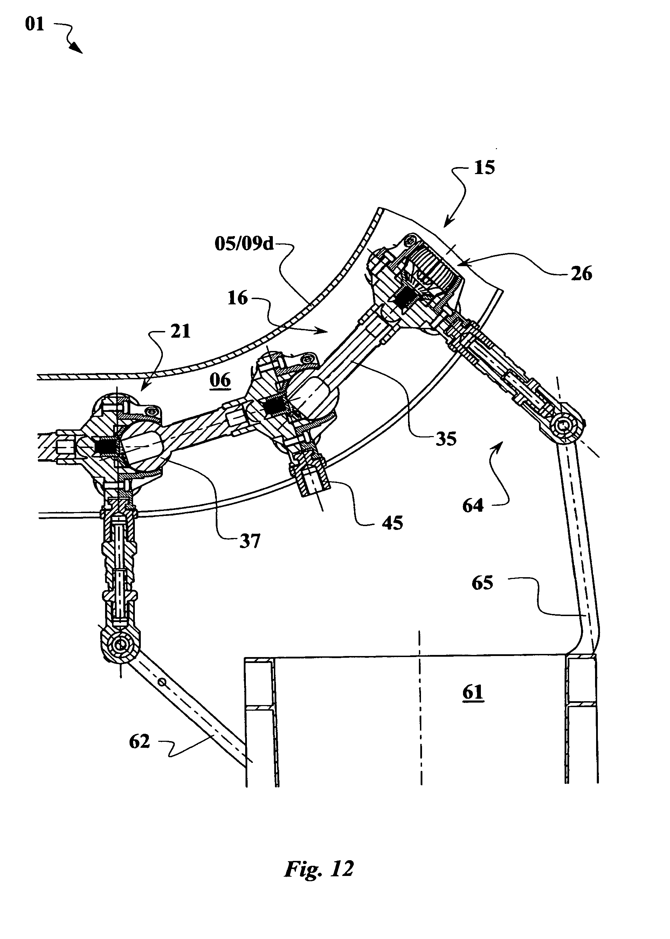

Ergänzend zeigt hierzu die **Figur 12** einen vertikalen Schnitt durch einen Abschnitt der Transportvorrichtung 01 in einem vertikalen Bahnbogenabschnitt 09d. Insbesondere ist hier das Verschwenken der einzelnen Laufwagenelemente 16 zueinander zu erkennen, sowie das Schwenken der ersten und der zweiten Gelenkstrebe 62, 63 relativ zu den jeweiligen Schnellschluss-Gelenkverbindungen 64. Weiterhin zu erkennen ist, dass unabhängig von der Lage im räumlichen Bahnverlauf der Güterträger 61 in der Waagrechten verbleibt.

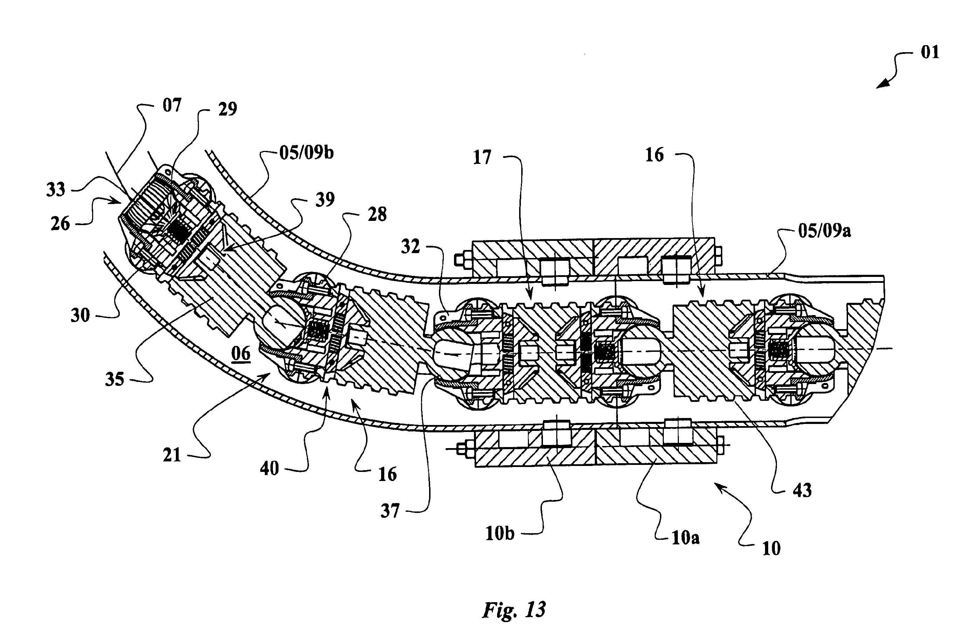

In der **Figur 13** ist wiederum ein Abschnitt der Transportvorrichtung 01, diesmal in einem horizontalen Schnitt, skizziert. Hierbei ist zunächst wiederum der Verlauf der Führungsschiene 05 mit einem waagrechten Bahnbogenabschnitt 09c zu erkennen. Unterhalb der skizzierten Laufwagenanordnung 15 befindet sich der Schlitz 07 der Führungsschiene 05. Die Verbindung zwischen den einzelnen Schienensegmenten 09 wird mittels eines Segmentverbinders 10 realisiert. Hierbei ist jeweils an beiden Enden der Bahnabschnitte 09a bzw. 09c eine Segmentverbinderhälfte 10a bzw. 10b montiert. Zum Fügen der Schienensegmente 09 werden diese Segmentverbinderhälften 10a bzw. 10b aneinandergeschraubt. Weiterhin zu erkennen ist in diesem Schnitt die Gestalt der Verbindungsstrebe 35 mit den beidseitigen Zahnstangen 43 sowie die Verbindung zum Laufkörper 21 mittels Steckverbindung 39 sowie der Rastverbindung 40.

Weiterhin wird in diesem Beispiel die Möglichkeit zum Einsatz des Doppel-Laufwagenelements 17 skizziert. Dieses befindet sich in diesem Ausführungsbeispiel im Verlauf der Laufwagenanordnung 15. Insofern schließen beidseitig entgegengesetzt ausgerichtet die regulären Laufwagenelemente 16 an. Im einfachsten Fall wird man die Anordnung des Doppel-Laufwagenelements 17 am Anfang bzw. Ende einer Laufwagenanordnung 15 wählen.

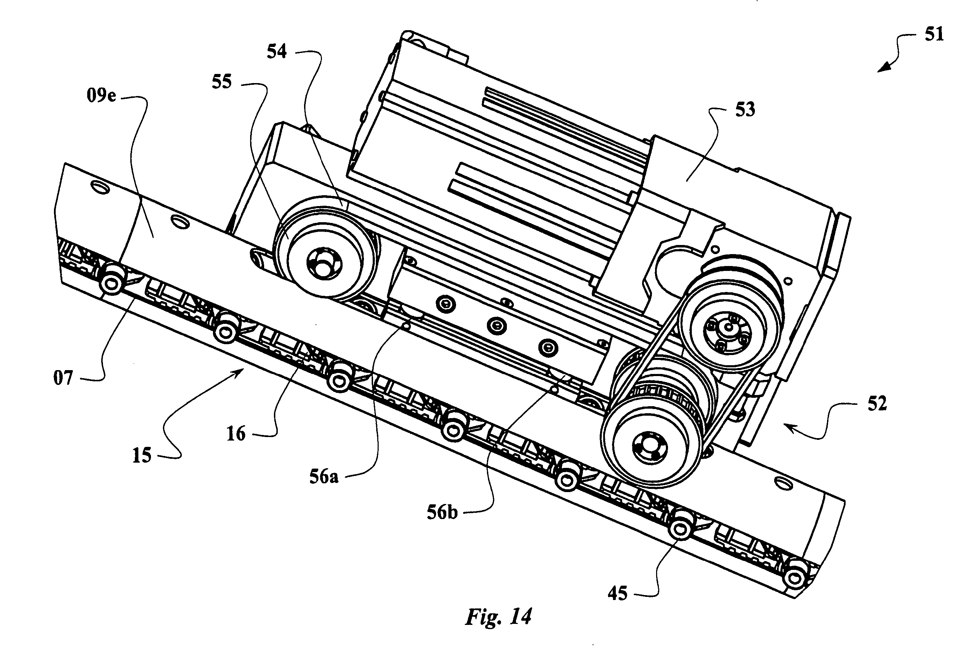

In der **Figur 14** wird beispielhaft eine Antriebsanordnung 51 zum Antrieb der Laufwagenanordnung 15 innerhalb der Führungsschiene 05 skizziert. Diese weist in diesem Beispielfall auf einer Seite der Führungsschiene bzw. des Antriebssegments 09e der Führungsschiene 05 einen Zahnriemenantrieb 52 auf. Dieser wiederum wird angetrieben von einem Getriebemotor 53. Der Zahnriemenantrieb 52 umfasst hierbei einen Zahnriemen 54 (in vereinfachter Darstellung ohne Zähne), welcher über zwei Umlenkrollen 55 geführt wird. Mittels der Anpressrollen 56a bzw. 56b wird der Zahnriemen an die einzelnen Laufwagenelemente in die Zahnstange 43 gedrückt und zum Eingriff gebracht.

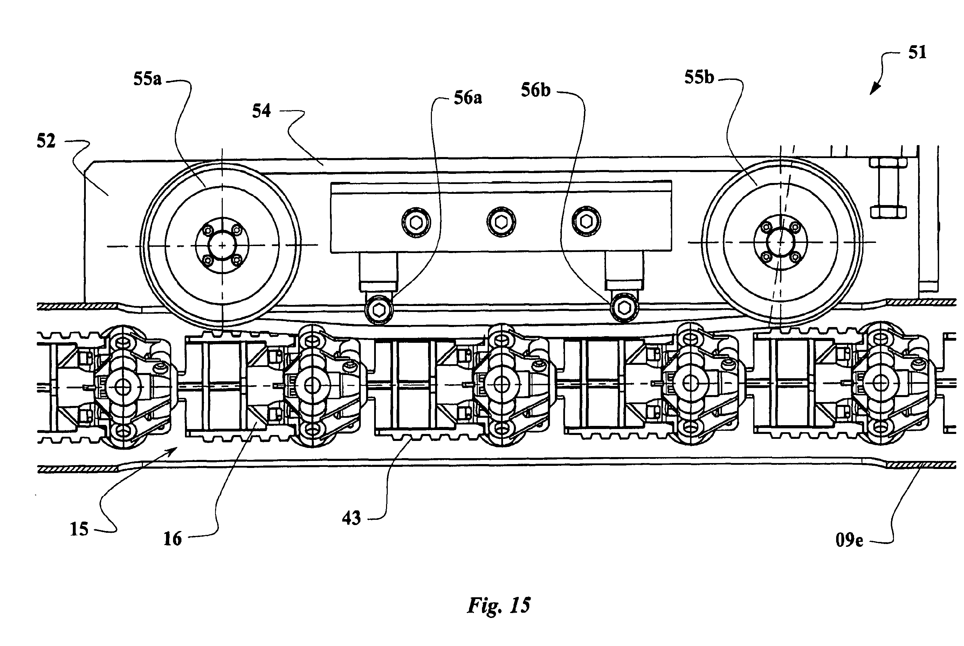

Die **Figur 15** zeigt ergänzend zur Fig. 14 die Antriebsanordnung 51 im Teilschnitt. Zu erkennen ist mittig in der Führungsschiene bzw. dem Antriebssegment 09e die Laufwagenanordnung 15 mit den einzelnen Laufwagenelementen 16. Deren äußeren Zahnstangen 43 bilden die entsprechende Antriebsfläche zur Bewegung der Antriebsanordnung 51. Hierbei wird beim Zahnriemenantrieb 52 der Zahnriemen 54 durch die Anpressrollen 56a und 56b gegen die Zahnstangen 43 gepresst. Hierbei sind die Anpressrollen 56a und 56b federnd gelagert.

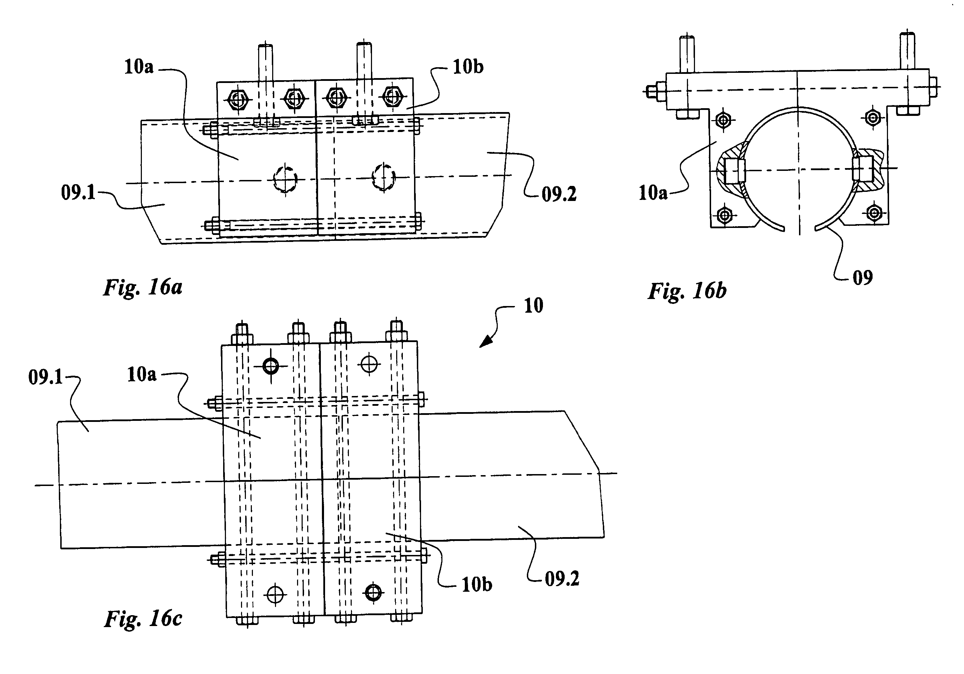

In den **Figuren 16a** bis **16c** wird beispielhaft die Möglichkeit zur Verbindung der einzelnen Schienensegmente 09 skizziert. Dies erfolgt im Beispielfall mittels Segmentverbindern 10. Diese umfassen wiederum zwei Segmentverbinderhälften 10a und 10b. An jeweils einem Ende eines Schienensegments 09.1 bzw. 09.2 wird jeweils eine Segmentverbinderhälfte 10a bzw. 10b vormontiert. Hierbei umgreifen die Segmentverbinderhälften 10a bzw. 10b die Führungsschiene 05. Aufgrund des Versatzes der Segmentverbinderhälfte 10b am Ende des Schienensegments 09.2 wird es ermöglicht, dass die Schienensegmente 09.1 und 09.2 exakt zueinander fluchten. Hierbei überragt die Segmentverbinderhälfte 10a das Schienensegment 09.1 und wird zur Montage in die Segmentverbinderhälfte 10b eingesteckt. Die eigentliche Verbindung der beiden Segmentverbinderhälften erfolgt mittels parallel zur Schienenachse verlaufender Schraubverbindungen. Somit wird in einfacher Weise eine sichere Verbindung erzielt, ohne dass Fluchtungsfehler auftreten können.

Weiterhin zu erkennen ist ansatzweise die mögliche Befestigung der Segmentverbinder 10 an einem Gestell oder dergleichen. Hierzu bieten sich die Segmentverbinder 10 besonders vorteilhaft an, da hieran eine ebene Anschraubfläche zur Verfügung steht.

### Bezugszeichenliste

| | | | |
|---|---|---|---|
| 01 | Transportvorrichtung | 33 | Kugelhülsenabschnitt |
| 03 | Führungsbahn | 35 | Verbindungsstrebe |
| | | 36 | Doppel-Verbindungsstrebe |
| 05 | Führungsschiene | 37 | Zweites Gelenkelement /Gelenkkugel |
| 06 | Führungsquerschnitt | | |
| 07 | Schlitz in Führungsschiene | | |
| 08 | Mittelachse Führungsschiene | 39 | Steckverbindung Verbindungs-strebe zu Laufkörper |
| 09 | Schienensegmente | | |
| 09a | Waagrechter Bahnabschnitt | 40 | Rastverbindung Verbindungsstrebe zu Laufkörper |
| 09b | Vertikaler Bahnabschnitt | | |
| 09c | Waagrechter Bahnbogen | 41 | Federnd gelagerter Rastbolzen |
| 09d | Vertikaler Bahnbogen | | |
| 09e | Antriebssegment | 43 | Zahnstange |
| 10 | Segmentverbinder | 43a | Zahnstangenabschnitt an Verbindungsstrebe |
| 10a | Segmentverbinderhälfte | | |
| 10b | Segmentverbinderhälfte | 43b | Zahnstangenabschnitt an Laufkörperhälfte |
| 15 | Laufwagenanordnung | 43c | Zahnstangenabschnitt an Laufkörperviertel |
| 16 | Laufwagenelement | | |
| 17 | Doppel-Laufwagenelement | 45 | Lastträger |
| 19 | Mittellängsachse | 46 | Führungsrolle |
| 21 | Laufkörper | 51 | Antriebsanordnung |
| 22 | Laufrollen | 52 | Zahnriemenantrieb |
| 23 | Feststehende Laufrollen | 53 | Getriebemotor |
| 24 | Federnd gelagerte Laufrollen | 54 | Zahnriemen |
| | | 55 | Umlenkrollen |
| 26 | Erstes Gelenkelement | 56 | Anpressrollen |
| 28 | Erstes Bauteil des Laufkörpers / Laufkörperhälfte | 61 | Güterträger |
| | | 62 | Erste Gelenkstrebe |
| 29 | Kugelpfanne | 63 | Zweite Gelenkstrebe |
| 30 | Federelement | 64 | Schnellverschluss-Gelenkverbindung |
| 32 | Zweites Bauteil des Laufkörpers / Laufkörperviertel | 65 | Trägerschwenkhebel |
| 101, 201 | | Transportvorrichtung | |
| 105, 205 | | Führungsschiene | |
| 106, 206 | | Führungsquerschnitt | |
| 107, 207 | | Schlitz in Führungsschiene | |
| 208 | | Mittelachse Führungsschiene | |
| 219 | | Mittellängsachse | |
| 121, 221 | | Laufkörper | |
| 122, 222 | | Laufrollen | |
| 228 | | Erstes Bauteil des Laufkörpers / Laufkörperunterteil | |
| 229 | | Kugelpfanne | |
| 232 | | Zweites Bauteil des Laufkörpers / Laufkörperoberteil | |
| 233 | | Kugelteilhülse | |
| 237 | | Zweites Gelenkelement / Gelenkkugel | |
| 145, 245 | | Lastträger | |
| 246 | | Führungsrolle | |

## Patentansprüche

1. Transportvorrichtung (01, 101, 201) zum Transport von insbesondere stückigen Gütern, insbesondere pharmazeutischen Produkten, mit einer Führungsbahn (03) und einer an der Führungsbahn (03) angeordneten antreibbaren Laufwagenanordnung (15), die mindestens zwei Laufwagenelemente (16, 17) aufweist, welche jeweils eine Verbindungsstrebe (35, 36) aufweisen, an deren ersten Ende zumindest ein Laufkörper (21, 121, 221) angeordnet ist, der gleitend oder rollend an der Führungsbahn (03) geführt ist, wobei der Laufkörper (21, 121, 221) ein erstes Gelenkelement (26) und das zweite Ende der Verbindungsstrebe (35) ein zweites Gelenkelement (37) aufweist, wobei das erste Gelenkelement (26) eines ersten der beiden Laufwagenelemente (16, 17) mit dem zweiten Gelenkelement (37) des zweiten der beiden Laufwagenelemente (16) gelenkig miteinander verbindbar ist,
**dadurch gekennzeichnet,**
**dass** das erste Gelenkelement (26) des Laufkörpers (21, 121, 221) als Kugelaufnahme und das zweite Gelenkelement (37, 237) als Gelenkkugel ausgebildet sind, wobei durch die beiden Gelenkelemente (26, 37, 237) ein Kugelgelenk gebildet wird, das eine Verschwenkung und/oder Verdrehung der beiden verbundenen Laufwagenelemente (16, 17) gegeneinander ermöglicht, wobei die Kugelaufnahme von einer Kugelpfanne (29, 229) und zumindest einem Kugelhülsenabschnitt (33, 233) gebildet wird, wobei die Kugelpfanne (29, 229) in einem ersten, auf der Seite der Verbindungsstrebe (35, 36) angeordneten Bauteil (28, 228) des Laufkörpers (21, 121, 221) und der Kugelhülsenabschnitt (33, 233) an einem zweiten Bauteil (32, 232) des Laufkörpers (21, 121, 221) angeordnet ist.

2. Transportvorrichtung (01, 101, 201) nach Anspruch 1,
**gekennzeichnet durch**
zumindest ein Doppel-Laufwagenelement (17) mit einer Verbindungsstrebe (36), an deren beiden Enden zumindest ein Laufkörper (21, 121, 221) angeordnet ist, wobei zumindest ein Laufkörper (21, 121, 221) ein erstes Gelenkelement (26) aufweist, das gelenkig mit dem zweiten Gelenkelement (37) eines anderen Laufwagenelements (16) verbindbar ist.

3. Transportvorrichtung (01, 101, 201) nach Anspruch 2,
**gekennzeichnet durch**
zumindest ein Verbindungs-Laufwagenelement mit einer Verbindungsstrebe, an deren beiden Enden ein zweites Gelenkelement (37) angeordnet ist, welche mit den ersten Gelenkelementen (26) zweier anderer Laufwagenelemente (16, 17) verbindbar sind.

4. Transportvorrichtung (01, 101, 201) zum Transport von insbesondere stückigen Gütern, insbesondere pharmazeutischen Produkten, mit einer Führungsbahn (03) und einer an der Führungsbahn (03) angeordneten antreibbaren Laufwagenanordnung (15), die mindestens zwei Laufwagenelemente (16, 17) aufweist, welche jeweils eine Verbindungsstrebe (35, 36) aufweisen, an deren ersten Ende zumindest ein Laufkörper (21, 121, 221) angeordnet ist, der gleitend oder rollend an der Führungsbahn (03) geführt ist, wobei zumindest zwei Laufwagenelemente als Doppel-Laufwagenelemente (17) ausgeführt sind, welche an beiden Enden der Verbindungsstrebe (36) einen Laufkörper (21, 121, 221) mit je einem ersten Gelenkelement (26) aufweisen, wobei die Laufwagenanordnung (15) weiterhin zumindest ein Verbindungs-Laufwagenelement umfasst, welches an beiden Enden der Verbindungsstrebe ein zweites Gelenkelement (37) aufweist, wobei das erste Gelenkelement (26) eines Doppel-Laufwagenelements (17) mit dem zweiten Gelenkelement (37) des Verbindungs-Laufwagenelements gelenkig miteinander verbindbar ist,
**dadurch gekennzeichnet,**
**dass** das erste Gelenkelement (26) des Laufkörpers (21, 121, 221) als Kugelaufnahme und das zweite Gelenkelement (37, 237) als Gelenkkugel ausgebildet sind, wobei durch die beiden Gelenkelemente (26, 37, 237) ein Kugelgelenk gebildet wird, das eine Verschwenkung und/oder Verdrehung der beiden verbundenen Laufwagenelemente (16, 17) gegeneinander ermöglicht, wobei die Kugelaufnahme von einer Kugelpfanne (29, 229) und zumindest einem Kugelhülsenabschnitt (33, 233) gebildet wird, wobei die Kugelpfanne (29, 229) in einem ersten, auf der Seite der Verbindungsstrebe (35, 36) angeordneten Bauteil (28, 228) des Laufkörpers (21, 121, 221) und der Kugelhülsenabschnitt (33, 233) an einem zweiten Bauteil (32, 232) des Laufkörpers (21, 121, 221) angeordnet ist.

5. Transportvorrichtung (01, 101, 201) nach einem der Ansprüche 1 bis 4,
**dadurch gekennzeichnet,**
**dass** der Laufkörper (21, 121, 221) mindestens drei, insbesondere vier, am Umfang angeordnete, drehbar gelagerte Laufrollen (22, 23, 24, 122, 222) aufweist.

6. Transportvorrichtung (01, 101, 201) nach Anspruch 5,
**dadurch gekennzeichnet,**
**dass** mindestens eine der Laufrollen (24) elastisch am Laufkörper (21, 121, 221) gelagert ist.

7. Transportvorrichtung (01, 101, 201) nach einem der Ansprüche 1 bis 6,
**dadurch gekennzeichnet,**
**dass** die Führungsbahn (03) als im wesentlichen über ihre gesamte Länge geschlitzte Führungsschiene (05, 105, 205) ausgebildet ist, wobei die Laufwagenanordnung (15) mit den Laufkörpern (21, 121, 221) und Verbindungsstreben (35, 36) innerhalb der Führungsschiene (05, 105, 205) angeordnet ist, wobei mindestens ein Laufwagenelement (16, 17) mindestens einen Lastträger (45, 145, 245) aufweist, der durch den Schlitz (07, 107, 207) aus der Führungsschiene (05, 105, 205) herausragt.

8. Transportvorrichtung (01, 101, 201) nach Anspruch 7,
**dadurch gekennzeichnet,**
**dass** am Lastträger (45, 145, 245) ein Führungselement angeordnet ist, mit dem der Lastträger (45, 145, 245) im Schlitz (07, 107, 207) der Führungsschiene (05, 105, 205) geführt ist.

9. Transportvorrichtung (01) nach Anspruch 7 oder 8,
**gekennzeichnet durch**
mindestens einen, vorzugsweise schalen- oder korbartigen Güterträger (61), der am Lastträger (45) mindestens eines Laufwagenelements (16, 17) befestigbar ist.

10. Transportvorrichtung (01) nach Anspruch 9,
**dadurch gekennzeichnet,**
**dass** der Güterträger (61) mit zwei Gelenkstreben (62, 63) an jeweils einem Lastträger (45) einer Laufwagenanordnung (15) derart angebunden ist, dass die gelenkige Anbindung der Gelenkstreben (62, 63) eine Schwenkbewegung zwischen Lastträger (45) und Gelenkstrebe (62, 63) und eine Schwenkbewegung zwischen Gelenkstrebe (62, 63) und Güterträger (61) ermöglicht.

11. Transportvorrichtung (01, 101, 201) nach einem der Ansprüche 1 bis 10,
**dadurch gekennzeichnet,**
**dass** die Kugelpfanne (29, 229) in einer ersten, auf der Seite der Verbindungsstrebe (35, 36) angeordneten Laufkörperhälfte (28, 228) des Laufkörpers (21, 121, 221) und/oder der Kugelhülsenabschnitt (33, 233) an einem zweiten Laufkörperviertel (32, 232) des Laufkörpers (21, 121, 221) angeordnet ist.

12. Transportvorrichtung (01) nach einem der Ansprüche 1 bis 11,
**dadurch gekennzeichnet,**
**dass** die Trennebene zwischen dem ersten (28) und zweiten Bauteil (32) bzw. zwischen der Kugelpfanne (29) und dem Kugelhülsenabschnitt (33) senkrecht zu einer Mittellängsachse (19) des Laufwagenelements (16, 17) liegt.

13. Transportvorrichtung (01) nach Anspruch 11 oder 12,
**dadurch gekennzeichnet,**
**dass** die Kugelpfanne (29) im wesentlichen stirnseitig als Anlagefläche für die Gelenkkugel (37) des jeweils gelenkig zu verbindenden benachbarten Laufwagenelements (16) ausgebildet ist und der Kugelhülsenabschnitt (33) unter Umgreifen der Gelenkkugel (37) an das erste Bauteil (28) befestigt ist.

14. Transportvorrichtung (01) nach einem der Ansprüche 1 bis 13,
**dadurch gekennzeichnet,**
**dass** die Kugelpfanne (29) federnd im ersten Bauteil (28) gelagert ist und auf die Gelenkkugel (37) des folgenden Laufwagenelements (16) gedrückt wird.

15. Transportvorrichtung (201) nach einem der Ansprüche 1 bis 11,
**dadurch gekennzeichnet,**
**dass** die Trennebene zwischen dem ersten (228) und zweiten Bauteil (232) bzw. zwischen der Kugelpfanne (229) und dem Kugelhülsenabschnitt (233) in einer Mittellängsachse (219) des Laufwagenelements liegt.

16. Transportvorrichtung (01) nach einem der Ansprüche 1 bis 15,
**dadurch gekennzeichnet,**
**dass** der Laufkörper (21) und/oder das zweite Gelenkelement (37) an der Verbindungsstrebe (35, 36) lösbar befestigt ist.

17. Transportvorrichtung nach einem der Ansprüche 1 bis 16,
**gekennzeichnet durch**
mindestens einen in die Führungsbahn (03) eingreifenden Reibriemen- oder Reibradantrieb, dessen Antriebselemente über an den Laufwagenelementen angeordnete Antriebsflächen einen Friktionsantrieb der Laufwagenanordnung bewirken.

18. Transportvorrichtung (01) nach einem der Ansprüche 1 bis 16,
**gekennzeichnet durch**
mindestens einen in die Führungsbahn (03) eingreifenden Zahnriemen- (52) oder Zahnradantrieb, dessen Antriebselemente (54) über an den Laufwagenelementen (16, 17) angeordnete Antriebsflächen (43) einen Zahnantrieb der Laufwagenanordnung (15) bewirken.

19. Transportvorrichtung nach Anspruch 15 oder 16,
**dadurch gekennzeichnet,**
**dass** mindestens zwei zur Führungsbahn (03) symmetrisch angeordnete Antriebe vorgesehen sind.

20. Transportvorrichtung (01) nach einem der Ansprüche 17 bis 19
**dadurch gekennzeichnet,**
**dass** der Reibriemen bzw. das Reibrad bzw. der Zahnriemen (54) bzw. das Zahnrad senkrecht zur Führungsbahn (03) elastisch gelagert ist.

## Claims

1. A transport apparatus (01, 101, 201) for transporting in particular solid goods, in particular pharmaceutical products, comprising a guide track (03) and a drivable moving truck arrangement (15) which is arranged on the guide track (03) and comprises at least two moving truck elements (16, 17) which each comprise a connecting strut (35, 36), on the first end of which at least one moving member (21, 121, 221) is arranged, which is guided in a sliding or rolling manner on the guide track (03), wherein the moving member (21, 121, 221) comprises a first hinged element (26) and the second end of the connecting strut (35) comprises a second hinged element (37), wherein the first hinged element (26) of a first one of the two moving truck elements (16, 17) is articulately connectable to the second hinged element (37) of the second one of the two moving truck elements (16),
**characterized in that**
the first hinged element (26) of the moving member (21, 121, 221) is formed as a ball reception and the second hinged element (37, 237) is formed as a joint ball, the two hinged elements (26, 37, 237) forming a ball and socket joint which allows a pivoting and/or rotating of the two connected moving truck elements (16, 17) relative to each other, wherein the ball reception is formed by a ball socket (29, 229) and at least one ball sleeve section (33, 233), wherein the ball socket (29, 229) is arranged in a first component (28, 228) of the moving member (21, 121, 221), said component being arranged on the side of the connecting strut (35, 36), and the ball sleeve section (33, 233) is arranged on a second component (32, 232) of the moving member (21, 121, 221).

2. The transport apparatus (01, 101, 201) according to claim 1,
**characterized by**
at least one double moving truck element (17) comprising a connecting strut (36), on the two ends of which at least one moving member (21, 121, 221) is arranged, wherein at least one moving member (21, 121, 221) comprises a first hinged element (26) which is articulately connectable to the second hinged element (37) of another moving truck element (16).

3. The transport apparatus (01, 101, 201) according to claim 2,
**characterized by**
at least one connecting moving truck element with a connecting strut, on the two ends of which a second hinged element (37) is arranged, being connectable to the first hinged elements (26) of two other moving truck elements (16, 17).

4. A transport apparatus (01, 101, 201) for transporting in particular solid goods, in particular pharmaceutical products, comprising a guide track (03) and a drivable moving truck arrangement (15) which is arranged on the guide track (03) and comprises at least two moving truck elements (16, 17) which each comprise a connecting strut (35, 36), on the first end of which at least one moving member (21, 121, 221) is arranged, which is guided in a sliding or rolling manner on the guide track (03), wherein at least two moving truck elements are realized as double moving truck elements (17) which on both ends of the connecting strut (36) comprise a moving member (21, 121, 221) with a first hinged element (26), respectively, wherein the moving truck arrangement (15) further comprises at least one connecting moving truck element which on both ends of the connecting strut comprises a second hinged element (37), wherein the first hinged element (26) of a double moving truck element (17) is articulately connectable to the second hinged element (37) of the connecting moving truck element,
**characterized in that**
the first hinged element (26) of the moving member (21, 121, 221) is formed as a ball reception and the second hinged element (37, 237) is formed as a joint ball, the two hinged elements (26, 37, 237) forming a ball and socket joint which allows for a pivoting and/or rotating of the two connected moving truck elements (16, 17) relative to each other, wherein the ball reception is formed by a ball socket (29, 229) and at least one ball sleeve section (33, 233), wherein the ball socket (29, 229) is arranged in a first component (28, 228) of the moving member (21, 121, 221), said component being arranged on the side of the connecting strut (35, 36), and the ball sleeve section (33, 233) is arranged on a second component (32, 232) of the moving member (21, 121, 221).

5. The transport apparatus (01, 101, 201) according to any of the claims 1 to 4,
**characterized in that**
the moving member (21, 121, 221) comprises at least three, in particular four, moving rollers (22, 23, 24, 122, 222), which are arranged on the circumference and are mounted so as to be rotatable.

6. The transport apparatus (01, 101, 201) according to claim 5,
**characterized in that**
at least one of the moving rollers (24) is mounted elastically on the moving member (21, 121, 221).

7. The transport apparatus (01, 101, 201) according to any of the claims 1 to 6,
**characterized in that**
the guide track (03) is formed as a guide rail (05, 105, 205) which is slit substantially across its entire length , wherein the moving truck arrangement (15) is arranged with the moving members (21, 121, 221) and connecting struts (35, 36) within the guide rail (05, 105, 205), wherein at least one moving truck element (16, 17) comprises at least one load carrier (45, 145, 245) which protrudes through the slit (07, 107, 207) out of the guide rail (05, 105, 205).

8. The transport apparatus (01, 101, 201) according to claim 7,
**characterized in that**
on the load carrier (45, 145, 245) a guiding element is arranged, by means of which the load carrier (45, 145, 245) is guided in the slit (07, 107, 207) of the guide rail (05, 105, 205).

9. The transport apparatus (01) according to claim 7 or 8,
**characterized by**
at least one preferably tray- or basket-like goods carrier (61) which is attachable to the load carrier (45) of at least one moving truck element (16, 17).

10. The transport apparatus (01) according to claim 9,
**characterized in that**
the goods carrier (61) is attached with two joint rods (62, 63) to respectively one load carrier (45) of a moving truck arrangement (15) in such a manner that the articulate connection of the joint rods (62, 63) allows a pivot motion between the load carrier (45) and the joint rod (62, 63) and a pivot motion between the joint rod (62, 63) and the goods carrier (61).

11. The transport apparatus (01, 101, 201) according to any of the claims 1 to 10,
**characterized in that**
the ball socket (29, 229) is arranged in a first moving member half (28, 228) of the moving member (21, 121, 221), said moving member half being arranged on the side of the connecting strut (35, 36), and/or the ball sleeve section (33, 233) is arranged on a second moving member quarter (32, 232) of the moving member (21, 121, 221).

12. The transport apparatus (01) according to any of the claims 1 to 11,
**characterized in that**
the separating plane between the first (28) and the second component (32), respectively between the ball socket (29) and the ball sleeve section (33), lies vertical to a middle longitudinal axis (19) of the moving truck element (16, 17).

13. The transport apparatus (01) according to claim 11 or 12,
**characterized in that**
the ball socket (29) is formed substantially as an abutment surface for the front of the joint ball (37) of the neighbouring moving truck element (16) to be articulately connected, respectively, and the ball sleeve section (33) is attached to the first component (28) while surrounding the joint ball (37).

14. The transport apparatus (01) according to any of the claims 1 to 13,
**characterized in that**
the ball socket (29) is mounted elastically in the first component (28) and is pressed onto the joint ball (37) of the following moving truck element (16).

15. The transport apparatus (201) according to any of the claims 1 to 11,
**characterized in that**
the separating plane between the first (228) and the second component (232), respectively between the ball socket (229) and the ball sleeve section (233), lies in a middle longitudinal axis (219) of the moving truck element.

16. The transport apparatus (01) according to any of the claims 1 to 15,
**characterized in that**
the moving member (21) and/or the second hinged element (37) are removably attached to the connecting strut (35, 36).

17. The transport apparatus according to any of the claims 1 to 16,
**characterized by**
at least one friction belt or friction wheel drive which engages in the guide track (03) and the drive elements of which effect a friction drive of the moving truck arrangement via drive surfaces arranged on the moving truck elements.

18. The transport apparatus (01) according to any of the claims 1 to 16,
**characterized by**
at least one toothed belt (52) or gear wheel drive which engages in the guide track (03) and the drive elements (54) of which effect a gear drive of the moving truck arrangement (15) via drive surfaces (43) arranged on the moving truck elements (16, 17).

19. The transport apparatus according to claim 15 or 16,
**characterized in that**
at least two drives are provided, which are arranged symmetrical to the guide track (03).

20. The transport apparatus (01) according to any of the claims 17 to 19,
**characterized in that**
the friction belt, respectively the friction wheel, respectively the toothed belt (54), respectively the gear wheel, is elastically mounted vertical to the guide track (03).

## Revendications

1. Dispositif de transport (01, 101, 201) pour transporter en particulier des marchandises solides, en particulier des produits pharmaceutiques, comprenant une piste de guidage (03) et un ensemble de chariot (15) étant disposé sur la piste de guidage (03) et comprenant au moins deux éléments de chariot (16, 17) qui comprennent respectivement une entretoise de liaison (35, 36), au moins un corps de roulement (21, 121, 221) étant disposé à la première extrémité de ladite entretoise et étant guidé de manière glissante ou roulante sur la piste de guidage (03), le corps de roulement (21, 121, 221) comprenant un premier élément articulé (26) et la deuxième extrémité de l'entretoise de liaison comprenant un deuxième élément articulé (37), le premier élément articulé (26) d'un premier des deux éléments de chariot (16, 17) étant connectable de manière articulée au deuxième élément articulé (37) du deuxième des deux éléments de chariot (16),
**caractérisé en ce que**
le premier élément articulé (26) du corps de roulement (21, 121, 221) est formé en tant que réception sphérique et le deuxième élément articulé (37, 237) est formé en tant que bille d'articulation, les deux éléments articulés (26, 37, 237) formant une articulation sphérique qui permet aux deux éléments de chariot (16, 17) connectés de pivoter et/ou tourner l'un par rapport à l'autre, le réception sphérique étant formée par un logement sphérique(29, 299) et au moins une section de douille à bille (33, 233), le logement sphérique (29, 299) étant disposé dans un composant (28, 228) du corps de roulement (21, 121, 221), ledit composant étant disposé du côté de l'entretoise de liaison (35, 36), et la section de douille à bille (33, 233) étant disposée sur un deuxième composant (32, 232) du corps de roulement (21, 121, 221).

2. Dispositif de transport (01, 101, 201) selon la revendication 1,
**caractérisé par**
au moins un élément de chariot double (17) comprenant une entretoise de liaison (36), au moins un corps de roulement (21, 121, 221) étant disposé aux deux extrémités de ladite entretoise, au moins un corps de roulement (21, 121, 221) comprenant un premier élément articulé (26) qui est connectable de manière articulée au deuxième élément articulé (37) d'un autre élément de chariot (16).

3. Dispositif de transport (01, 101, 201) selon la revendication 2,
**caractérisé par**
au moins un élément de chariot de liaison comprenant une entretoise de liaison, un deuxième élément articulé (37) étant disposé aux deux extrémités de ladite entretoise, lesdits deuxièmes éléments articulés étant connectables aux premiers éléments articulés (26) de deux autres éléments de chariot (16, 17).

4. Dispositif de transport (01, 101, 201) pour transporter en particulier des marchandises solides, en particulier des produits pharmaceutiques, comprenant une piste de guidage (03) et un ensemble de chariot (15) entraînable étant disposé sur la piste de guidage (03) et comprenant au moins deux éléments de chariot (16, 17) qui comprennent respectivement une entretoise de liaison, au moins un corps de roulement (21, 121, 221) étant disposé à la première extrémité de ladite entretoise, qui est guidé de manière glissante ou roulante sur la piste de guidage (03), au moins deux éléments de chariot étant formés en tant qu'éléments de chariot doubles (17) comprenant aux deux extrémités de l'entretoise de liaison (36) un corps de roulement (21, 121, 221) comprenant respectivement un premier élément articulé (26), l'ensemble de chariot (15) comprenant en outre au moins un élément de chariot de liaison qui comprend aux deux extrémités de l'entretoise de liaison un deuxième élément articulé (37), le premier élément articulé (26) d'un élément de chariot double (17) étant connectable de manière articulée au deuxième élément articulé (37) de l'élément de chariot de liaison,
**caractérisé en ce que**
le premier élément articulé (26) du corps de roulement (21, 121, 221) est formé en tant que réception sphérique et le deuxième élément articulé (37, 237) est formé en tant que bille d'articulation, les deux éléments articulés (26, 37, 237) formant une articulation sphérique qui permet aux deux éléments de chariot (16, 17) connectés de pivoter et/ou tourner l'un par rapport à l'autre, la réception sphérique étant formée par un logement sphérique (29, 229) et au moins une section de douille à bille (33, 233), le logement sphérique (29, 229) étant disposé dans un premier composant (28, 228) du corps de roulement (21, 121, 221), ledit composant étant disposé du côté de l'entretoise de liaison (35, 36), et la section de douille à bille (33, 233) étant disposée sur un deuxième composant (32, 232) du corps de roulement (21, 121, 221).

5. Dispositif de transport (O1, 101, 201) selon l'une quelconque des revendications 1 à 4,
**caractérisé en ce que**
le corps de roulement (21, 121, 221) comprend au moins trois, en particulier quatre galets de roulement (22, 23, 24, 122, 222) montés de manière tournante et disposés sur la circonférence.

6. Dispositif de transport (O1, 101, 201) selon la revendication 5,
**caractérisé en ce qu'**
au moins un desdits galets de roulement (24) est monté élastiquement sur le corps de roulement (21, 121, 221).

7. Dispositif de transport (O1, 101, 201) selon l'une quelconque des revendications 1 à 6,
**caractérisé en ce que**
la piste de guidage (03) est formée en tant que rail de guidage (05, 105, 205) essentiellement rainuré sur toute sa longueur, l'ensemble de chariot (15) étant disposé avec les corps de roulement (21, 121, 221) et les entretoises de liaison (35, 36) dans le rail de guidage (05, 105, 205), au moins un élément de chariot (16, 17) comprenant au moins un porte-charge (45, 145, 245) qui fait saillie à partir du rail de guidage (05, 105, 205) à travers la rainure (07, 107, 207).

8. Dispositif de transport (01, 101, 201) selon la revendication 7,
**caractérisé en ce que**
sur le porte-charge (45, 145, 245) un élément de guidage est disposé, à l'aide duquel le porte-charge (45, 145, 245) est guidé dans la rainure (07, 107, 207) du rail de guidage (05, 105, 205).

9. Dispositif de transport (01) selon la revendication 7 ou 8,
**caractérisé par**
au moins un porteur de marchandises (61), préférablement sous forme de bac ou panier, qui est fixable au porte-charge (45) d'au moins un élément de chariot (16, 17).

10. Dispositif de transport (01) selon la revendication 9,
**caractérisé en ce que**
le porteur de marchandises (61) est connecté par deux barres de joint (62, 63) à respectivement un porte-charge (45) d'un ensemble de chariot (15) de telle manière que la connexion articulée des barres de joint (62, 63) permette un mouvement pivotant entre le porte-charge (45) et la barre de joint (62, 63) et un mouvement pivotant entre la barre de joint (62, 63) et le porteur de marchandises (61).

11. Dispositif de transport (01, 101, 201) selon l'une quelconque des revendications 1 à 10,
**caractérisé en ce que**
le logement sphérique (29, 229) est disposé dans une première moitié de corps de roulement (28, 228) du corps de roulement (21, 121, 221), ladite moitié étant disposée du côté de l'entretoise de liaison (35, 36), et/ou la section de douille à bille (33, 233) est disposée sur un deuxième quart de corps de roulement (32, 232) du corps de roulement (21, 121, 221).

12. Dispositif de transport (01) selon l'une quelconque des revendications 1 à 11,
**caractérisé en ce que**
le plan de séparation entre le premier composant (28) et le deuxième composant (32), respectivement entre le logement sphérique (29) et la section de douille à bille (33), s'étend verticalement par rapport à un axe longitudinal central (19) de l'élément de chariot (16, 17).

13. Dispositif de transport (01) selon la revendication 11 ou 12,
**caractérisé en ce que**
le logement sphérique (29) est formé essentiellement en tant que surface de butée pour le front de la bille d'articulation (37) de l'élément de chariot (16) voisin qu'il faut respectivement connecter de manière articulée, et la section de douille à bille (33) est fixée au premier composant en entourant la bille d'articulation.

14. Dispositif de transport (01) selon l'une quelconque des revendications 1 à 13,
**caractérisé en ce que**
le logement sphérique (29) est monté élastiquement dans le premier composant (28) et est pressé sur la bille d'articulation (37) de l'élément de chariot (16) suivant.

15. Dispositif de transport (201) selon l'une quelconque des revendications 1 à 11,
**caractérisé en ce que**
le plan de séparation s'étend entre le premier composant (228) et le deuxième composant (232), respectivement entre le logement sphérique (229) et la section de douille à bille (233), dans un axe longitudinal central (219) de l'élément de chariot.

16. Dispositif der transport (01) selon l'une quelconque des revendications 1 à 15,
**caractérisé en ce que**
le corps de roulement (21) et/ou le deuxième élément articulé (37) sont fixés de manière détachable à l'entretoise de liaison (35, 36).

17. Dispositif de transport selon l'une quelconque des revendications 1 à 16,
**caractérisé par**
au moins un entraînement par courroie de friction ou par roue de friction s'engrenant dans la piste de guidage (03), dont les éléments d'entraînement effectuent un entraînement par friction de l'ensemble de chariot par des surfaces d'entraînement disposées sur les éléments de chariot.

18. Dispositif de transport (01) selon l'une quelconque des revendications 1 à 16,
**caractérisé par**
au moins un entraînement par courroie dentée (52) ou roue dentée s'engrenant dans la piste de guidage (03), dont les éléments d'entraînement (54) effectuent un entraînement par moyen denté de l'ensemble de chariot (15) par des surfaces d'entraînement disposées sur les éléments de chariot (16, 17).

19. Dispositif de transport selon la revendication 15 ou 16,
**caractérisé en ce qu'**
au moins deux entraînements sont prévus disposés symétriquement par rapport à la piste de guidage (03).

20. Dispositif de transport (01) selon l'une quelconque des revendications 17 à 19,
**caractérisé en ce que**
la courroie de friction, respectivement la roue de friction, respectivement la courroie dentée (54), respectivement la roue dentée, est élastiquement montée verticalement par rapport à la piste de guidage (03).
